(19) Europäisches Patentamt

European Patent Office

Office européen des brevets

(11) **EP 4 787 795 A1**

(12) **EUROPEAN PATENT APPLICATION**

(43) Date of publication:
05.08.2026 Bulletin 2026/32

(21) Application number: 26154235.1

(22) Date of filing: **26.01.2026**

(51) International Patent Classification (IPC):
**H04L 41/0631** (2022.01)  **H04L 41/5009** (2022.01)
**H04L 43/091** (2022.01)  **G06F 11/07** (2006.01)
**H04L 43/08** (2022.01)  **H04L 43/16** (2022.01)
**H04L 41/22** (2022.01)

(52) Cooperative Patent Classification (CPC):
**H04L 41/5009; G06F 11/079; H04L 41/0631;
H04L 43/091;** H04L 41/22; H04L 43/08; H04L 43/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 04.02.2025 US 202519045231

(71) Applicant: **Juniper Networks, Inc.
Sunnyvale, CA 94089 (US)**

(72) Inventors:
• **Banka, Tarun
Sunnyvale (US)**
• **Lnu, Prashant
Sunnyvale (US)**
• **Gupta, Rahul
Sunnyvale (US)**
• **Sridhar, Thayumanavan
Sunnyvale (US)**
• **Chauhan, Amandeep
Sunnyvale (US)**
• **Yavatkar, Rajendra Shivaram
Sunnyvale (US)**

(74) Representative: **D Young & Co LLP
3 Noble Street
London EC2V 7BQ (GB)**

(54) **FRAMEWORK FOR AGGREGATING APPLICATION-AWARE SERVICE LEVEL EXPECTATIONS FOR ROOT CAUSE ANALYSIS**

(57) A computing system comprising storage media and processing circuitry may perform the techniques. The processing circuitry may aggregate a plurality of performance metrics for a plurality of network entities of a network system into a metric indicative of a health of the plurality of network entities. The processing circuitry may, based at least in part on a determination that the aggregated metric indicative of the health of the plurality of network entities does not satisfy a threshold, identify one or more network entities of the plurality of network entities for which the corresponding performance metrics of the plurality of performance metrics contributed to the aggregated metric not satisfying the threshold. The processing circuitry may output a cause of fault associated with the identified one or more network entities.

FIG. 1

## EP 4 787 795 A1

**Description**

This application claims the benefit of US Patent Application No. 19/045,231, filed 4 February 2025, the entire contents of which is incorporated herein by reference.

**TECHNICAL FIELD**

The disclosure relates to computer networks, and more particularly, to root cause analysis of anomalies in computer networks.

**BACKGROUND**

A computer network is a collection of interconnected computing devices that can exchange data and share resources. A variety of devices operate to facilitate communication between the computing devices. For example, a computer network may include routers, switches, gateways, firewalls, and a variety of other devices to provide and facilitate network communication.

**SUMMARY**

Particular aspects are set out in the appended independent claims. Various optional embodiments are set out in the dependent claims.

In general, this disclosure describes techniques, systems and a framework for measuring and aggregating application-aware short-term and long-term service level expectations for performing root cause analysis of network issues. The root cause analysis can include analysis of data collected at several different layers of a network system, including application layers to network layers. The root cause analysis can also include analysis of data collected across different network and deployment scenarios, where applications communicate across cloud environments, hybrid cloud environments, multi-cloud environments, on-prem data centers, and the like.

Network performance can be based on many factors, including dynamics of application behavior, compute/-memory/storage infrastructure, and network performance behavior. Any performance bottleneck in the underlying physical layer has the potential to degrade the performance of the application perceived by the end users. The emergence of microservices based cloud native application architecture and their highly distributed nature has the potential to make troubleshooting any performance bottleneck a highly challenging task. Network performance can be even more critical to the performance of microservice based applications, which may operate in reduced timeframes (e.g., on the order of milliseconds, seconds, and/or minutes), being initialized and de-initialized based on demand or other factors. Given the reduced timeframes, quickly determining the root cause of application performance degradation to reduce MTTR (Mean time to Resolution) and MTTI (Mean Time to Identify) issues in a network may allow more efficient operation of microservice based applications.

Disclosed herein is a framework and system configured to localize the root cause of the performance degradation of microservices-based applications based on service level expectations (SLE), which are determined based on analyzing performance metrics of the application and the performance metrics of underlying network components, such as compute resources and network devices used by the application, to correlate application performance with the performance of the underlying components. When the performance of such an application degrades, the framework may be able to determine, based on the SLE of the underlying network components, an underlying network component that may be the cause of the performance degradation.

The techniques of the disclosure may provide specific improvements to the computer-related field of root cause analysis in computer networks that may have one or more practical applications. In this respect, various aspects of the techniques may, for example, improve operation of microservice based applications themselves along with computing systems executing such microservice based applications. That is, troubleshooting microservice based application that are quickly initiated in response to demand and therefore may be short lived (e.g., on the order of milliseconds, seconds, and/or minutes) and automating identification of root causes that degrade the performance of microservice based application may allow for more efficient (e.g., in terms of computing resources, such as processing cycles, memory storage consumption, memory bus bandwidth utilization, associated power consumption, etc.) operation of underlying computing devices that execute the microservice based applications. In other words, by automatically performing a root cause analysis, various issues that impact execution of the microservice based applications may more quickly identify causes of degraded operation of microservice based applications, thereby resulting in more efficient operation of the microservice based applications but also the underlying computing devices executing the microservice based applications.

In some aspects, the techniques described herein relate to an analysis framework system including: storage media; and a processing circuitry in communication with the storage media, the processing circuitry configured to:

2

aggregate a plurality of performance metrics for a plurality of network entities of a network system into a metric indicative of a health of the plurality of network entities; based at least in part on a determination that the aggregated metric indicative of the health of the plurality of network entities does not satisfy a threshold, identify one or more network entities of the plurality of network entities for which a corresponding performance metrics of the plurality of performance metrics contributed to the aggregated metric not satisfying the threshold; and output a cause of fault associated with the identified one or more network entities.

In some aspects, the techniques described herein relate to a method including: aggregating, by one or more processors of an analysis framework system, a plurality of performance metrics for a plurality of network entities of a network system into a metric indicative of a health of the plurality of network entities; based at least in part on a determination that the aggregated metric indicative of the health of the plurality of network entities does not satisfy a threshold, identifying, by the one or more processors, one or more network entities of the plurality of network entities for which a corresponding performance metrics of the plurality of performance metrics contributed to the aggregated metric not satisfying the threshold; and outputting, by the one or more processors, a cause of fault associated with the identified one or more network entities.

In some aspects, the techniques described herein relate to a computer-readable medium having instructions encoded thereon that, when executed, cause one or more processors to execute an analysis framework system, wherein the analysis framework system is configured to: aggregate a plurality of performance metrics for a plurality of network entities of a network system into a metric indicative of a health of the plurality of network entities; based at least in part on a determination that the aggregated metric indicative of the health of the plurality of network entities does not satisfy a threshold, identify one or more network entities of the plurality of network entities for which a corresponding performance metrics of the plurality of performance metrics contributed to the aggregated metric not satisfying the threshold; and output a cause of fault associated with the identified one or more network entities.

The details of one or more examples are set forth in the accompanying drawings and the description below. Other features, objects, and advantages will be apparent from the description and drawings, and from the claims.

## BRIEF DESCRIPTION OF DRAWINGS

FIG. 1 is a block diagram illustrating an example network system including a framework system for aggregating application-aware service level expectations for root cause analysis, in accordance with one or more aspects of the techniques described in this disclosure.

FIG. 2 is a block diagram illustrating a root-cause analysis framework system, in accordance with aspects of the disclosure.

FIG. 3 is a block diagram illustrating an example network node, in accordance with the techniques described in this disclosure.

FIG. 4 is a flow diagram illustrating an example operation of a root cause analysis framework system, in accordance with one or more techniques of this disclosure.

FIG. 5 is a block diagram illustrating example techniques for determining service level expectations between application endpoints, in accordance with one or more techniques of this disclosure.

FIG. 6 is a block diagram illustrating example techniques for determining service level expectations between groups of application endpoints, in accordance with one or more techniques of this disclosure.

FIG. 7 is a block diagram illustrating example short term service level expectations, in accordance with one or more techniques of this disclosure.

FIG. 8 is a block diagram illustrating example techniques for determining long term service level expectations, in accordance with one or more techniques of this disclosure.

FIG. 9 illustrates an example user interface that shows performance metrics of different layers of a network topology.

FIG. 10 illustrates an example user interface that shows a network topology of a network system.

FIG. 11 is a conceptual diagram illustrating example dependency graphs of a network system across two different monitoring time windows.

FIG. 12 is a conceptual diagram illustrating an example dependency graph.

FIG. 13 illustrates an example dependency graph.

FIG. 14 shows partial dependency graphs illustrating causal relationships between anomalous metrics.

FIGS. 15A-15C shows example dependency graphs illustrating example techniques of ranking possible root causes of anomalous nodes.

Like reference characters denote like elements in the figures and text.

## DETAILED DESCRIPTION

In general, this disclosure describes measuring and aggregating application-aware short-term and long-term service level expectations for performing root cause analysis of network issues using a framework for measuring and aggregating application-aware short term and long term service level expectations (SLE) in hybrid and multi-cloud networks.

In a hybrid and multi-cloud environment, applications are geographically distributed across on-premises data center and/or across one or more cloud networks. Such applications may communicate over diverse set of networks to meet the application's quality of service requirements. The performance of the application and network can be quantified using service level expectations (SLE). SLE are performance metrics that can be determined based on different key performance indicators (KPIs), such as response time, reachability, and the like that correspond to different network layers from the application to the network. End user experience in a hybrid and multi-cloud environment may be highly dependent on the SLE behavior of different layers from application to network in hybrid and multi-cloud environment.

The techniques for measuring and aggregating SLE of applications and network nodes in a network system may provide continuous visibility into the performance of each layer of the stack from application to network in hybrid and multi-cloud environment and enable aggregation of SLE at different granularities. Aspects of this disclosure may enable network connectivity to meet the desired service level expectations between two application endpoints. The SLE can be measured at different granularity such as individual application endpoint node SLE, network node SLE, aggregated application layer SLE, aggregated network layer SLE, network path SLEs.

For example, the SLE of an application layer can be determined based on the SLE of all or a subset of application nodes. Similarly, the SLE of a network layer can be determined based on the SLE of all or a subset of the network nodes in the network layer. Thus, when the SLE of a layer of the network degrades, the techniques of this disclosure may enable the ability to determine sub-entities in each layer, such as application services or network nodes, that are responsible for the degraded SLE, thereby providing the ability to determine the root cause of performance anomalies in layers of the network.

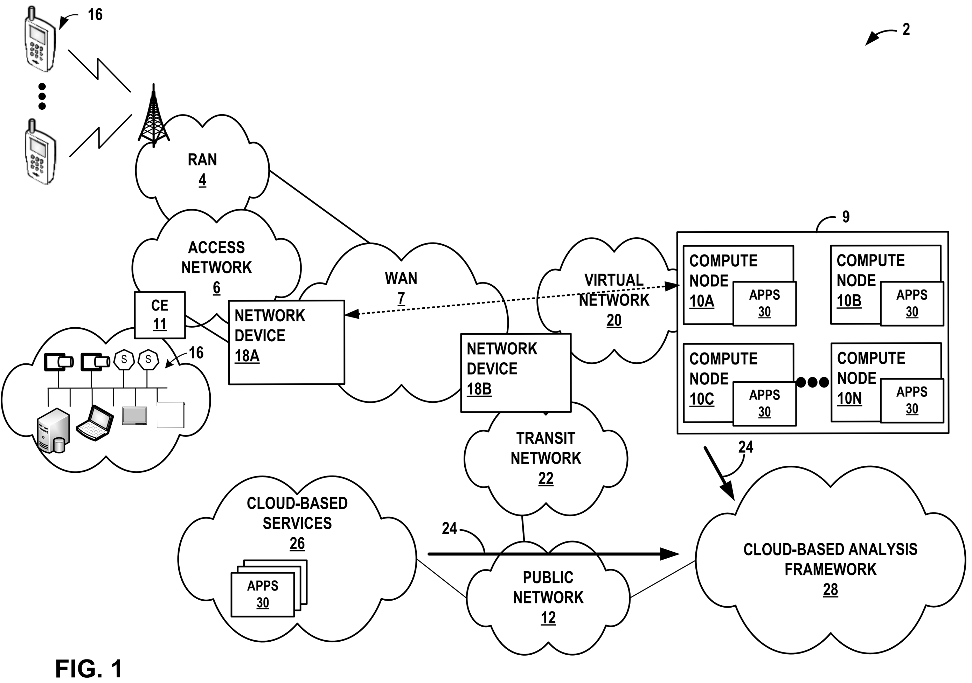

FIG. 1 is a block diagram illustrating an example network system 2, including a framework system for aggregating application-aware service level expectations for root cause analysis, in accordance with one or more aspects of the techniques described in this disclosure. Network system 2 may provide packet-based network services to subscriber devices 16. That is, network system 2 may provide authentication and establishment of network access for subscriber devices 16 such that a subscriber device may begin exchanging data packets with public network 12, which may be an internal or external packet-based network such as the Internet.

In the example of FIG. 1, network system 2 comprises access network 6 that provides connectivity to public network 12 via wide area network 7 (hereinafter, "WAN 7"). WAN 7 and public network 12 may provide packet-based services that are available for request and use by subscriber devices 16. As examples, WAN 7 and/or public network 12 may provide bulk data delivery, voice over Internet protocol (VoIP), Internet Protocol television (IPTV), Short Messaging Service (SMS), Wireless Application Protocol (WAP) service, or customer-specific application services. Public network 12 may comprise, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates access network 6, an enterprise IP network, or some combination thereof. In various examples, public network 12 is connected to a public WAN, the Internet, or to other networks. Public network 12 executes one or more packet data protocols (PDPs), such as IP (IPv4 and/or IPv6), X.25 or Point-to-Point Protocol (PPP), to enable packet-based transport of public network 12 services.

In general, subscriber devices 16 connect to network devices 18A-18B (collectively, "network devices 18") via access network 6 to receive connectivity to subscriber services for applications hosted by public network 12. A subscriber may represent, for instance, an enterprise, a residential subscriber, or a mobile subscriber. Subscriber devices 16 may be, for example, personal computers, laptop computers or other types of computing devices positioned behind customer equipment (CE) 11, which may provide local routing and switching functions. Each of subscriber devices 16 may run a variety of software applications, such as word processing and other office support software, web browsing software, software to support voice calls, video games, video conferencing, and email, among others. For example, subscriber device 16 may be a variety of network-enabled devices, referred generally to as "Internet-of-Things" (IoT) devices, such as cameras, sensors (S), televisions, appliances, etc. In addition, subscriber devices 16 may comprise mobile devices that access the data services of network system 2 via a radio access network (RAN) 4. Example mobile subscriber devices include mobile telephones, laptop or desktop computers having, e.g., a wireless card, wireless-capable netbooks, tablets, video game devices, pagers, smart phones, personal data assistants (PDAs) or the like.

A network service provider operates, or in some cases leases, elements (e.g., network devices - not shown in the example of FIG. 1) of access network 6 to provide packet transport between subscriber devices 16 and network device 18A. Access network 6 represents a network that aggregates data traffic from one or more of subscriber devices 16 for transport to/from WAN 7 of the service provider. Access network 6 includes network nodes that execute communication protocols to transport control and user data to facilitate communication between subscriber devices 16 and network device 18A. Access network 6 may include a broadband access network, a wireless LAN, a public switched telephone network (PSTN), a customer premises equipment (CPE) network, or other type of access network, and may include or otherwise provide connectivity for cellular access networks, such as a radio access network (RAN), e.g., RAN 4. Examples of the RAN include networks conforming to a 5th Generation (5G) mobile network, 4th Generation (4G) mobile network Universal Mobile Telecommunications System (UMTS) architecture, an evolution of UMTS referred to as Long Term Evolution (LTE), 5G including enhanced mobile broadband, mobile IP standardized by the Internet Engineering Task Force (IETF), as well as other standards proposed by the 3rd Generation Partnership Project (3GPP), 3rd Generation Partnership Project 2 (3GGP/2) and the WiMAX forum.

Network device 18 may each be a customer edge (CE) router, a provider edge (PE) router, SD-WAN edge device, service device, network appliance, a server executing virtualized network functions, or other computing device that provides connectivity between networks, e.g., access network 6 and public network 12, or network services. WAN 7 offers packet-based connectivity to subscriber devices 16 attached to access network 6 for accessing public network 12 (e.g., the Internet). WAN 7 may represent a public network that is owned and operated by a service provider to interconnect a plurality of networks, which may include access network 6. In some examples, WAN 7 may implement Multi-Protocol Label Switching (MPLS) forwarding and in such instances may be referred to as an MPLS network or MPLS backbone. In some instances, WAN 7 represents a plurality of interconnected autonomous systems, such as the Internet, that offers services from one or more service providers. Public network 12 may represent the Internet. Public network 12 may represent an edge network coupled to WAN 7 via a transit network 22 and one or more network devices, e.g., a customer edge device such as customer edge switch or router. Public network 12 may include a data center. In the example of FIG. 1, network device 18B may exchange packets with compute nodes 10A-10D ("compute nodes 10") via virtual network 20, and network device 18B may forward packets to public network 12 via transit network 22.

In examples of network system 2 that include a wireline/broadband access network, network devices 18A or 18B may represent a Broadband Network Gateway (BNG), Broadband Remote Access Server (BRAS), MPLS PE router, core router or gateway, or Cable Modem Termination System (CMTS). In examples of network system 2 that include a cellular access network as access network 6, network devices 18A or 18B may represent a mobile gateway, for example, a Gateway General Packet Radio Service (GPRS) Serving Node (GGSN), an Access Gateway (aGW), or a Packet Data Network (PDN) Gateway (PGW). In other examples, the functionality described with respect to network device 18B may be implemented in a switch, service card or another network element or component. In some examples, network device 18B may itself be a service node.

A network service provider that administers at least parts of network system 2 typically offers services to subscribers associated with devices, e.g., subscriber devices 16, that access network system 2. Services offered may include, for example, traditional Internet access, VoIP, video and multimedia services, and security services. As described above with respect to WAN 7, WAN 7 may support multiple types of access network infrastructures that connect to service provider network access gateways to provide access to the offered services, e.g., service provided by service node 10. In some instances, the network system may include subscriber devices 16 that attach to multiple different access networks 6 having varying architectures.

In general, any one or more of subscriber devices 16 may request authorization and data services by sending a session request to a gateway device such as network devices 18A or 18B. In turn, the network device may access a central server (not shown) such as an Authentication, Authorization and Accounting (AAA) server to authenticate the one of subscriber devices 16 requesting network access. Once authenticated, any of subscriber devices 16 may send subscriber data traffic toward WAN 7 to access and receive services provided by public network 12, and such packets may traverse network devices 18A or 18B as part of at least one packet flow. In some examples, network device 18A may forward all authenticated subscriber traffic to public network 12, and network device 18B may apply services and/or steer particular subscriber traffic to data center 9 if the subscriber traffic requires services on compute nodes 10. Service applications to be applied to the subscriber traffic may be hosted on compute nodes 10.

For example, network system 2 includes a data center 9 having a cluster of compute nodes 10 that provide an execution environment for the virtualized network services. In some examples, each of compute nodes 10 represents a service instance. Each of compute nodes 10 may apply one or more services to traffic flows. As such, network device 18B may steer subscriber packet flows through defined sets of services provided by compute nodes 10. That is, in some examples, each subscriber packet flow may be forwarded through a particular ordered combination of services provided by compute nodes 10, each ordered set being referred to herein as a "service chain." As examples, compute nodes 10 may apply stateful firewall (SFW) and security services, deep packet inspection (DPI), carrier grade network address translation (CGNAT), traffic destination function (TDF) services, media (voice/video) optimization, Internet Protocol security (IPSec)/virtual private network (VPN) services, hypertext transfer protocol (HTTP) filtering, counting, accounting, charging, and/or load balancing of packet flows, or other types of services applied to network traffic.

In some examples, network system 2 comprises a software defined network (SDN) and network functions virtualization (NFV) architecture. In these examples, an SDN controller (not shown) may provide a controller for configuring and managing the routing and switching infrastructure of network system 2.

Although illustrated as part of data center 9, compute nodes 10 may be network devices coupled by one or more switches or virtual switches of WAN 7. In one example, each of compute nodes 10 may run as virtual machines (VMs) in a virtual compute environment. Moreover, the compute environment may comprise a scalable cluster of general computing devices, such as x86 processor-based services. As another example, compute nodes 10 may comprise a combination of general-purpose computing devices and special-purpose appliances. As virtualized network services, individual network services provided by compute nodes 10 can scale just as in a modern data center through the allocation of virtualized memory, processor utilization, storage and network policies, as well as horizontally by adding additional load balanced VMs. In other examples, compute nodes 10 may be gateway devices or other routers. In further examples, the functionality described with respect to each of compute nodes 10 may be implemented in a switch, service card, or another network element or component.

Subscriber devices 16 may be configured to utilize the services provided by one or more of applications 30 hosted on servers that are part of cloud-based services 26. In some aspects, cloud-based services 26 may be provided from one or more datacenters, including datacenter 9 by way of compute nodes 10. An application of applications 30 may be configured to provide a single service, or it may be configured as multiple microservices. For purposes of illustration, it is assumed that an application of applications 30 is configured as multiple microservices. A subscriber device 16 can utilize the services of an application of applications 30 by communicating requests to the application of applications 30 and receiving responses from the application of applications 30 via public network 12. In some aspects, applications 30 may be containerized applications (or microservices).

Containerization is a virtualization scheme based on operating system-level virtualization. Containers are light-weight and portable execution elements for applications that are isolated from one another and from the host. Such isolated systems represent containers, such as those provided by the open-source DOCKER Container application or by CoreOS Rkt ("Rocket"). Like a virtual machine, each container is virtualized and may remain isolated from the host machine and other containers. However, unlike a virtual machine, each container may omit an individual operating system and instead provide an application suite and application-specific libraries. In general, a container is executed by the host machine as an isolated user-space instance and may share an operating system and common libraries with other containers executing on the host machine. Thus, containers may require less processing power, storage, and network resources than virtual machines. A group of one or more containers may be configured to share one or more virtual network interfaces for communicating on corresponding virtual networks.

Because containers are not tightly-coupled to the host hardware computing environment, an application can be tied to a container image and executed as a single light-weight package on any host or virtual host that supports the underlying container architecture. As such, containers address the problem of how to make software work in different computing environments. Containers offer the promise of running consistently from one computing environment to another, virtual or physical.

Applications 30 can be deployed and/or distributed across any suitable variety of environments, such as cloud environments, multi-cloud environments (e.g., on-prem to multiple clouds), hybrid on-prem to cloud environments (e.g., via colocation and/or Internet connections), inter and intra cloud to cloud environments (e.g., via direct connect and/or Internet), and the like. As such, for applications 30 built on cloud-native microservices architecture, the microservices of applications 30 may communicate with each other over hybrid and/or multi-cloud networks that span across cloud providers and on-premises data centers.

As described herein, computing devices within network system 2 may provide network monitoring services. For example, network devices 18 and/or compute nodes 10 are configured as measurement points to provide network monitoring services to determine, for example, network performance and functionality, as well as interconnections of service chains. Components of network system 2, such as devices and nodes within network system 2, may provide telemetry data (e.g., in the form of timeseries data, which may also be referred to as "time series data") that can be used to determine health of some or all of the network. Computing devices and nodes may send and/or receive test packets to compute one or more key performance indicators (KPIs) of the network, such as latency, delay (inter frame gap), jitter, packet loss, throughput, and the like. The nodes and devices may send test packets in accordance with various protocols, such as Hypertext Transfer Protocol (HTTP), Internet Control Message Protocol (ICMP), Speedtest, User Datagram Protocol (UDP), Transmission Control Protocol (TCP), Operations, Administration and Maintenance (OAM) functions (e.g., Y.1731), Two-Way Active Measurement Protocol (TWAMP), Internet Protocol television (IPTV) and Over the Top (OTT) protocol, VoIP telephony and Session Initiation Protocol (SIP), mobile radio, remote packet inspection, and other protocols to measure network performance. The nodes and devices may calculate KPIs related to resource utilization, such as CPU utilization, memory utilization, etc. In some examples, network devices 18 and/or compute nodes 10 may execute application performance management tools to provide performance telemetry (e.g., of application workloads), network topology information, and the like to cloud-based analysis framework 28. Network devices 18 and/or compute nodes 10 may also provide any other suitable information to cloud-based analysis framework system 28, such as log data.

Nodes, devices, and services send their KPIs 24 to cloud-based analysis framework system 28 as a time series data. Cloud based analysis framework system 28 can receive KPIs and other data, and use the received data to detect anomalies in network and/or compute node operation. In some aspects, cloud-based analysis framework system 28 can be implemented, at least in part, as a containerized framework system.

In accordance with aspects of this disclosure, cloud-based analysis framework system 28 may detect anomalies in network system 2 based on determining the service level expectations (SLE) behavior of applications 30 and other network nodes within network system 2. Cloud-based analysis framework system 28 may aggregate a plurality of performance metrics for a plurality of network entities of network system 2 into a metric indicative of a health of the plurality of network entities. Cloud-based analysis framework system 28 may, based at least in part on a determination that the aggregated metric indicative of the health of the plurality of network entities does not satisfy a threshold, identify one or more network entities of the plurality of network entities for which the corresponding performance metrics of the plurality of performance metrics contributed to the aggregated metric not satisfying the threshold. Cloud-based analysis framework system 28 may output an indication of a cause of fault associated with the identified one or more network entities.

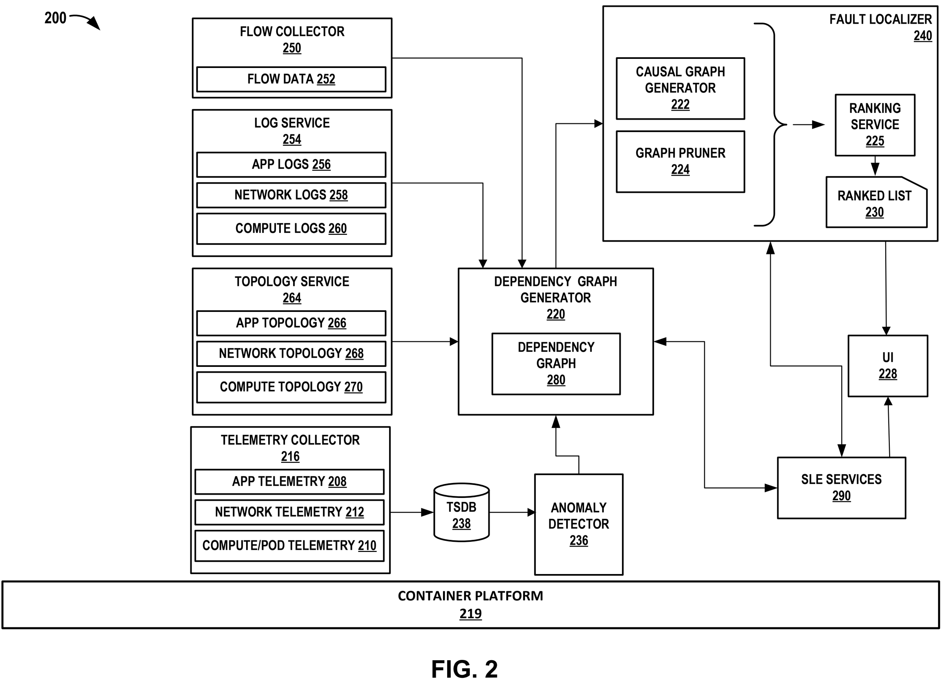

FIG. 2 is a block diagram illustrating a root-cause analysis framework system, in accordance with aspects of the disclosure. Root cause analysis framework system 200 can be implemented as part of cloud-based analysis framework system 28 (FIG. 1). In some aspects, root cause analysis framework system 200 includes telemetry collector 216, flow collector 250, log service 254, topology service 264, dependency graph generator 220, SLE services 290, anomaly detector 236, and fault localizer 240.

Topology service 264 can determine network topology of network system 2. Examples of topologies that may be supported by topology service 264 include application topology 266, network topology 268, and compute topology 270. The network topology of network system 2 may include a plurality of logical layers of the network. As used herein, a layer can refer to a set of components (real or virtual) that use resources and services provided by another set of components at a different layer. In cases where a first component uses resources or services of a second component, the first component can be said to be dependent on the second component. For example, applications at an application layer may use resources and services of a compute node at a compute node layer. The compute node layer may, in turn, use resources and services provided by network devices at a network layer, and so on. Thus, applications at the application layer are dependent on compute nodes at a compute node layer, which in turn, may be dependent on physical network devices (e.g., compute nodes 10 shown in the example of FIG. 1) at the network physical layer.

Flow collector 250 may collect network flow data 252 from network system 2. Such network flow data 252 may be network traffic flowing within network system 2. In some examples, flow collector 250 may be a sflow collector.

Log service 254 may collect log data generated from network entities of network system 2. Such log data may include application logs 258 generated by applications 30, network logs 258 generated by network devices in network system 2, and compute logs 260 generated by compute nodes 10.

Telemetry collector 216 is a service that collects telemetry from network entities of network system 2 of FIG. 1. Telemetry collector 216 can collect application telemetry 208 such as application performance data. Application telemetry may be collected using service-mesh, Istio, etc. Telemetry collector 216 can also collect compute/pod telemetry 210. Compute/pod telemetry 210 can include Kubernetes pod and node performance telemetry data such as central processor unit (CPU) usage, memory usage, network statistics, etc. In some aspects, telemetry collector 216 can be implemented using the Prometheus monitoring system combined with the Thanos high availability and data storage systems and/or OpenTelemetry. Prometheus, OpenTelemetry, and Thanos are open source components. Telemetry collector 216 can also collect network telemetry 212 that measure end-to-end network performance. Telemetry collector 216 can collect telemetry data from network devices in a network fabric of network system 2 (e.g., network devices 18).

Service level expectations (SLE) module 290 may determine the SLE of layers of a network topology and of individual nodes of the network topology to quantitatively measure the extent to which desired performance requirements are met for a specific entity in dependency graph 280 in each monitoring time window. The SLE of a specific entity may be represented as a numerical score between 0 and 100, where a score of 0 denotes that the SLE are not met during the entire duration of the monitoring window, while a score of 100 denotes that the SLE are consistently met during the entire duration of the monitoring window.

SLE module 290 may receive application telemetry 208, compute/pod telemetry 210, and/or network telemetry 212 collected by telemetry collector 216 and may derive SLE for network entities such as individual application endpoints and network nodes (e.g., network devices) within network system 2. SLE module 290 may also derive aggregated SLE for a plurality of network entities, such as SLE of each of a plurality of layers of the network topology of network system 2. Such layer may include an application layer that includes application endpoints (e.g., of applications 30), a compute layer that include compute nodes 10, a network layer that includes network devices (e.g., routers, switches, etc.), a transit gateway layer that includes transit gateways, a gateway layer that includes gateway devices, and the like.

SLE module 290 may determine whether network connectivity meets the desired service level expectations between two application endpoints. SLE module 290 may measure SLEs at different granularities, such as individual application endpoint node SLE, network node SLE, aggregated application layer SLE, aggregated network layer SLE, network path SLEs, and the like. Analysis framework system 200 may use such SLE measured by SLE module 290 to determine whether network connectivity meets the desired SLEs between two application endpoints and to determine root causes of the network connectivity not meeting the desired SLEs.

SLE module 290 may determine SLEs for network entities based on performance metrics of the entities, which may be specified in application telemetry 208, compute/pod telemetry 210, and/or network telemetry 212 collected by telemetry collector 216. SLE module 290 may determine SLEs for network entities for a monitoring time window, such as five minutes, fifteen minutes, thirty minutes, an hour, and the like, and may periodically re-determine SLEs for network entities for new monitoring time windows.

SLE module 290 may determine, for each application endpoint in a network topology and for each monitoring time window, an application node SLE, which is the SLE of the application endpoint, which may be communicating with one or more other application endpoints. In some examples, the monitoring time window may be short-term, such as last 5 minutes, or may be long-term, such as one week.

SLE module 290 may determine the application node SLE for an application endpoint based on aggregated performance metrics for the application endpoint that include bandwidth metrics, connectivity metrics, and latency metrics for the application endpoint. As such, the SLE may include a bandwidth SLE, a connectivity SLE, and a latency SLE. SLE module 290 may compare bandwidth metrics, connectivity metrics, and latency metrics for the application endpoint against thresholds (e.g., key performance indicators) for bandwidth, connectivity, and latency to determine the bandwidth SLE, the connectivity SLE, and the latency SLE, respectively for the application endpoint.

The bandwidth SLE may be a measure of the degree to which the application bandwidth is within an expected range over the measurement interval when the application endpoint communicates with other application endpoints. In some examples, the bandwidth SLE is scored on a scale of 0 to 100. A score of 100 may indicate that the application's bandwidth requirements are consistently met over a given time window duration, and a score of 0 may indicate that the application's bandwidth requirements are not met at all for the application endpoint in the given time window.

The connectivity SLE may be a measure of the reachability of a given application endpoint when communicating with one or more other application endpoints. The connectivity SLE may quantify how frequently connectivity issues occur for the application over a given time window. In some examples, the connectivity SLE is scored on a scale of 0 to 100. A score of 100 may indicate that there are no connectivity issues for a given application endpoint node when communicating with other application endpoints, and a score of 0 may indicate that the application endpoint is consistently observing connectivity issue with other application endpoints over the monitoring interval duration.

The latency SLE may be a measure of the latency experienced by a given application endpoint when communicating with one or more other application endpoints. The latency SLE may quantify how frequently the application's latency requirements are met while communicating with one or more other application endpoints. In some examples, the latency SLE is scored on a scale of 0 to 100. A score of 100 may indicate that there are no latency issues for a given application endpoint node when communicating with other application endpoints, and a score of 0 may indicate that the latency experienced by the application endpoint is not within acceptable limits for the entire monitoring interval duration.

SLE module 290 may determine, for an application endpoint, a singleton application node SLE based on the bandwidth SLE, the connectivity SLE, and the latency SLE for the application endpoint. The application node SLE for an application endpoint may be a metric indicative of the health of the application endpoint. Formally, the bandwidth SLE for an application node i is expressed as $App\_SLE_{bw,\,i}$, the connectivity SLE for an application node i is expressed as $App\_SLE_{connectivity,\,i}$, and the latency SLE for an application node i is expressed as $App\_SLE_{latency,\,i}$.

In some examples, SLE module 290 may determine the application node SLE for application node i as a weighted average of the bandwidth SLE for the application node, the connectivity SLE of the application node, and the latency SLE of the application node, expressed as follows: $App\_SLEi = Wbw\ App\_SLE_{bw,\,I} + W_{connectivity}\ App\_SLE_{connectivity,\,I} + W_{latency}\ App\_SLE_{latency,\,i}$, where $W_{bw}$ is the weight of the bandwidth SLE and has a value that is between 0 and 1, $W_{connectivity}$ is the weight of the connectivity SLE and has a value that is between 0 and 1, and $W_{latency}$ is the weight of the latency SLE and has a value that is between 0 and 1. The weights of the bandwidth SLE, the connectivity SLE, and the latency SLE may add up to 1, such that $W_{bw} + W_{connectivity} + W_{latency} = 1$. Alternatively, SLE module 290 may determine the application node SLE as the minimum SLE observed out of the bandwidth SLE, the connectivity SLE, and the latency SLE for the application node, which can be expressed as $App\_SLEi = min\ (App\_SLE_{bw,\,I},\ App\_SLE_{connectivity},\ App\_SLE_{latency,\,i})$.

In some examples, SLE module 290 may determine the performance of an application endpoint based on the application node SLE for the application endpoint. For example, SLE module 290 may compare the application node SLE for the application endpoint with a threshold, which may be a numerical value between 0 and 100, to determine whether the application endpoint satisfies the threshold. If SLE module 290 determines that the application node SLE for the application endpoint satisfies the threshold (e.g., is greater than or equal to the threshold), SLE module 290 may determine that the health of the application endpoint is good. If SLE module 290 determines that the application node SLE for the application endpoint does not satisfy the threshold (e.g., is less than the threshold), SLE module 290 may determine that the health of the application endpoint is not good (e.g., is of anomalous health).

In some examples, if SLE module 290 determines that the health of the application endpoint is not good, SLE module 290 may determine the cause of the bad health of the application endpoint. For example, SLE module 290 may compare the bandwidth SLE, connectivity SLE, and latency SLE of the application endpoint, with respective bandwidth, connectivity, and latency thresholds to determine whether each of the bandwidth SLE, connectivity SLE, and latency SLE of the application endpoint satisfies (e.g., is greater than or equal to) the respective bandwidth, connectivity, and latency thresholds. If SLE module 290 determines that one or more of the bandwidth SLE, connectivity SLE, and latency SLE of the application endpoint does not satisfy the respective bandwidth SLE, connectivity SLE, and latency SLE of the application endpoint, SLE module 290 may determine the cause of the bad health of the application endpoint to be the one or more of the bandwidth SLE, connectivity SLE, and latency SLE of the application endpoint that does not satisfy the respective bandwidth SLE, connectivity SLE, and latency SLE of the application endpoint. In some examples, SLE module 290 may output an indication of the determined cause of the bad health of the application endpoint, such as to user interface (UI) 228 for presentation in a user interface, anomaly detector 236, dependency graph generator 220, or fault localizer 240.

SLE module 290 may determine SLE for network nodes in a network topology. Such network nodes may include routers, switches, gateways, transit gateways, and other network devices in network system 2. SLE module 290 may determine two categories of SLE for a given network node: a network SLE and a network node system SLE. The network SLE for a network node is a measure of the network health from the perspective of the given network node. A network node can peer with multiple neighbor nodes, and the network SLE for a given network node may capture the network node's SLE with respect to each peer node.

SLE module 290 may determine, for each given network node and for each monitoring time window, a network SLE. SLE module 290 may determine the network SLE for a given network node based on aggregated performance metrics for the network SLE that include bandwidth metrics, loss metrics, latency metrics, and jitter metrics. As such, the network SLE for a given network node may include a bandwidth SLE, a loss SLE, a latency SLE, and a jitter SLE. SLE module 290 may compare bandwidth metrics, loss metrics, latency metrics, and jitter metrics for the network node against thresholds (e.g., key performance indicators) for bandwidth, loss, latency, and jitter to determine the bandwidth SLE, the loss SLE, the latency SLE, and the jitter SLE, respectively for the network node.

The bandwidth SLE may be a measure of, for a given network node, the degree to which the network node's bandwidth is within an expected range over the measurement interval when the network node communicates with neighboring network nodes. In some examples, the bandwidth SLE is scored on a scale of 0 to 100. A score of 100 may indicate that the network node's bandwidth requirements are consistently met over a given time window duration, and a score of 0 may indicate that the network node's bandwidth requirements are not met at all in the given time window.

The loss SLE is a measure of, for a given network node, whether the network node consistently meets acceptable loss requirements over the measurement interval when the network node communicates with neighboring network nodes. In some examples, the loss SLE is scored on a scale of 0 to 100. A score of 100 may indicate that the network node consistently meets acceptable loss requirements over a given time window duration, and a score of 0 may indicate that the network node does not meet acceptable loss requirements at all in the given time window.

The jitter SLE may be a measure of, for a given network node, whether the network node consistently meets acceptable jitter requirements over the measurement interval when the network node communicates with neighboring network nodes. In some examples, the jitter SLE is scored on a scale of 0 to 100. A score of 100 may indicate that the network node consistently meets acceptable jitter requirements over a given time window duration, and a score of 0 may indicate that the network node does not meet acceptable jitter requirements at all in the given time window.

The latency SLE may be a measure of, for a given network node, whether the latency between the network node and neighboring network nodes consistently meets acceptable latency requirements over the measurement interval. In some examples, the latency SLE is scored on a scale of 0 to 100. A score of 100 may indicate that the network node consistently meets acceptable latency requirements over a given time window duration, and a score of 0 may indicate that the network node does not meet acceptable latency requirements at all in the given time window.

SLE module 290 may determine a singleton network SLE for a network node based on the bandwidth SLE, the loss SLE, the latency SLE, and the jitter SLE for the network node. The network SLE for a given network node may be a metric indicative of the network performance of the network node. Given a network node Ni having M neighboring peer nodes, SLE module 290 may determine, for each node i and its peer node j, the bandwidth SLE $NW\_SLE_{bw,i,j}$, the loss SLE $NW\_SLE_{loss, i,j}$, the jitter SLE $NW\_SLE_{jitter, i,j}$, and the latency SLE $NW\_SLE_{latency, i,j}$.

In some examples, SLE module 290 may determine network SLEs of the given network node with a given peer node as a weighted average of the bandwidth SLE, the loss SLE, the latency SLE, and the jitter SLE for the given network node communicating with the given peer node, which is formally expressed as Network Node Peer $SLE_{i,j} = W_{bw} NW\_SLE_{bw, i,j} + W_{loss} NW\_SLE_{loss, i,j} + W_{jitter} NW\_SLE_{jitter, i,j} + W_{latency} NW\_SLE_{latency, i,j}$, where $W_{bw}$ is the relative weight of bandwidth SLE and is between 0 and 1, $W_{loss}$ is the relative weight of Loss SLE and is between 0 and 1, $W_{jitter}$ is the relative weight of Jitter SLE and is between 0 and 1, and $W_{latency}$ is the relative weight of Latency SLE and is between 0 and 1, such that the $W_{bw} + W_{loss} + W_{jitter} + W_{latency} = 1$. Once SLE module 290 determines, for a given network node i, SLE module 290 may, in some examples, determine the network SLE of node i as can be determined as the average of the SLEs of all peers of node i, as observed by the node i, formally expressed as $\text{Network\_SLE}_i = \frac{\sum_{j=1}^{M} SLE_{i,j}}{M}$. Alternatively, SLE module 290 may determine network SLE of node i as the minimum SLE out of the SLEs of all the peers of node i, formally expressed as $Network\_SLE_i = min$ (for all $SLE_{i,j}$ where $1 <= j <= M$).

SLE module 290 may also determine, for each given network node and for each monitoring time window, a network node system SLE. The network node system SLE of a network node may be a measure of the system health of the network node based on the system resource usage of the network node. SLE module 290 may determine the system SLE of a network node based on aggregated system performance metrics for the network node that include processor metrics, memory metrics, and disk input/output (I/O) metrics. As such, the SLE may include the processor SLE (also referred to as "central processing unit (CPU) SLE") of the network node, the memory SLE of the network node, and the disk SLE of the network node. SLE module 290 may compare processor metrics, memory metrics, and disk metrics for the network node against thresholds (e.g., key performance indicators) for CPU, memory, and disk to determine the processor SLE, memory SLE, and disk SLE for the network node.

The processor SLE for a given network node is a measure of whether the network node consistently meets acceptable processor usage requirements over a measurement interval. The measurement interval may be short-term, such as last 5 minutes, to long-term, such as one week. In some examples, the processor SLE is scored on a scale of 0 to 100. A score of 100 may indicate that the network node consistently meets acceptable processor usage requirements over a given time window duration, and a score of 0 may indicate that the network node does not meet acceptable processor usage requirements at all in the given time window.

The memory SLE for a given network node is a measure of whether the network node consistently meets acceptable memory usage requirements. The measurement interval may be short-term, such as last 5 minutes, to long-term, such as one week. In some examples, the memory SLE is scored on a scale of 0 to 100. A score of 100 may indicate that the network node consistently meets acceptable memory usage requirements over a given time window duration, and a score of 0 may indicate that the network node does not meet acceptable memory usage requirements at all in the given time window.

The disk SLE for a given network node is a measure of whether the network node consistently meets acceptable disk usage requirements. The measurement interval may be short-term, such as last 5 minutes, to long-term, such as one week. In some examples, the disk SLE is scored on a scale of 0 to 100. A score of 100 may indicate that the network node consistently meets acceptable disk usage requirements over a given time window duration, and a score of 0 may indicate that the network node does not meet acceptable disk usage requirements at all in the given time window.

SLE module 290 may determine a singleton system SLE for a network node based on the processor SLE, the memory SLE, and the disk SLE for the network node. The system SLE for a network node may be a metric indicative of the health of the hardware of the network node. Formally, given $SLE_{cpu,i}$ as the processor SLE for network node i, $SLE_{memory,I}$ as the memory SLE for network node i, and $SLE_{disk,I}$ as the disk SLE for network node i, SLE module 290 may determine the system SLE for network node i as a weighted average of the processor SLE, the memory SLE and the disk SLE. This can be expressed as $System\ SLE_i = W_{cpu}\ SLE_{cpu,i} + W_{memory}\ SLE_{memory,I} + W_{disk}SLE_{disk,i}$, where $W_{cpu}$ is the relative weight of processor SLE and is between 0 and 1, $W_{memory}$ is the relative weight of Memory SLE and is between 0 and 1, and $W_{disk}$ is the relative weight of Disk SLE and is between 0 and 1, and where $W_{cpu} + W_{disk} + W_{memory} = 1$. Alternatively, SLE module 290 may determine the system SLE of node i as the minimum SLE out of the processor SLE, the memory SLE and the disk SLE, formally expressed as $System\_SLE_i = min (SLE_{cpu,I}, SLE_{memory,I}, SLE_{disk,i})$.

SLE module 290 may determine a network node SLE for a given network node based on the previously-determined network SLE of the given network node and the system SLE of the given network node. For example, SLE module 290 may determine the network node SLE for a given network node i as a weighted average of the network SLE for the network node i and the system SLE for the network node i, formally expressed as $Network\_Node\_SLE_i = W_{network\_sle}Network\_SLE_i + W_{system\_sle}\ System\_SLE_i$. Alternatively, SLE module 290 may determine the network node SLE for a given network node i as the minimum SLE out of the network SLE for the network node i and the system SLE for the network node i, formally expressed as $Network\_Node\_SLE_i = min (Network\_SLE_i, System\_SLE_i)$.

In some examples, SLE module 290 may determine the performance of a network node based on the network node SLE for the network node. For example, SLE module 290 may compare the network node SLE for the network node with a threshold, which may be a numerical value between 0 and 100, to determine whether the network node satisfies the threshold. If SLE module 290 determines that the network node SLE for the network node satisfies the threshold (e.g., is greater than or equal to the threshold), SLE module 290 may determine that the health of the network node is good. If SLE module 290 determines that the network node SLE for the network node does not satisfy the threshold (e.g., is less than the threshold), SLE module 290 may determine that the health of the network node is not good (e.g., is of anomalous health).

In some examples, if SLE module 290 determines that the health of the network node is not good, SLE module 290 may determine the cause of the bad health of the network node. For example, SLE module 290 may compare the network SLE of the network node with a network threshold to determine whether the network SLE satisfies the threshold, and may compare the system SLE of the network node with a system threshold to determine whether the system SLE of the network node satisfies the system threshold.

If SLE module 290 determines that the network SLE of the network node does not satisfy the network threshold, SLE module 290 may determine that network health of the network node is the cause of the bad health of the network node. SLE module 290 may further compare the bandwidth SLE, the loss SLE, the latency SLE, and the jitter SLE of the network node against respective thresholds to determine if one of the bandwidth SLE, the loss SLE, the latency SLE, and the jitter SLE of the network node is the cause of the bad health of the network node.

If SLE module 290 determines that the system SLE of the network node does not satisfy the system threshold, SLE module 290 may determine that the system health of the network node is the cause of the bad health of the network node. SLE module 290 may further compare the processor SLE, the memory SLE, and the disk SLE for the network node against respective thresholds to determine if one of the processor SLE, the memory SLE, and the disk SLE for the network node is the cause of the bad health of the network node.

In some examples, SLE module 290 may output an indication of the determined cause of the bad health of the application endpoint, such as to user interface (UI) 228 for presentation in a user interface, anomaly detector 236, dependency graph generator 220, or fault localizer 240.

Besides determining node level SLE for different layers (e.g., application and network layers), SLE module 290 may also perform aggregation of node SLEs at different granularities. SLE module 290 may perform layer level aggregation of SLEs of the same node type, such as application endpoint nodes, network gateway nodes, and the like, to generate a singleton metric for the layer level SLE.

For example, if there are N application endpoint nodes present in a network topology, then SLE module 290 may determine the application layer level SLE as the average (e.g., mean) of the N application node SLE for application endpoints, which is formally expressed as $\mathrm{App\_Layer\_SLE} = \frac{\sum_{i=1}^{N} App\_SLE_i}{N}$. Similarly, if there are M network nodes present in a given topology, then SLE module 290 may determine the network layer level SLE as the average (e.g., mean) of the M network node SLE, which is formally expressed as $\mathrm{Network\_Layer\_SLE} = \frac{\sum_{i=1}^{M} Network\_SLE_i}{M}$.

In some examples, SLE module 290 may determine the performance of an application layer based on the application layer level SLE for the application layer. For example, SLE module 290 may compare the application layer level SLE for the application layer with a threshold, which may be a numerical value between 0 and 100, to determine whether the application layer satisfies the threshold. If SLE module 290 determines that the application layer level SLE for the application layer satisfies the threshold (e.g., is greater than or equal to the threshold), SLE module 290 may determine that the health of the application layer is good. If SLE module 290 determines that the application layer level SLE for the application layer does not satisfy the threshold (e.g., is less than the threshold), SLE module 290 may determine that the health of the application layer is not good (e.g., is of anomalous health).

In some examples, if SLE module 290 determines that the health of the application layer is not good, SLE module 290 may determine the cause of the bad health of the application layer. For example, SLE module 290 may compare the application node SLE of each of the application endpoints making up the application layer with a threshold to determine whether each of the application node SLE satisfies the threshold. If SLE module 290 determines that the application node SLE of one or more of the application endpoints of the application layer does not satisfy the threshold, SLE module 290 may determine the cause of the bad health of the application endpoint to be the one or more of the application endpoints of the application layer. In some examples, SLE module 290 may output an indication of the determined cause of the bad health of the application layer, such as to user interface (UI) 228 for presentation in a user interface, anomaly detector 236, dependency graph generator 220, or fault localizer 240.

Similarly, in some examples, SLE module 290 may determine the performance of an network layer based on the network level layer SLE for the network layer. For example, SLE module 290 may compare the network level layer SLE for the network layer with a threshold, which may be a numerical value between 0 and 100, to determine whether the network layer satisfies the threshold. If SLE module 290 determines that the network layer level SLE for the network layer satisfies the threshold (e.g., is greater than or equal to the threshold), SLE module 290 may determine that the health of the network layer is good. If SLE module 290 determines that the network layer level SLE for the network layer does not satisfy the threshold (e.g., is less than the threshold), SLE module 290 may determine that the health of the network layer is not good (e.g., is of anomalous health).

In some examples, if SLE module 290 determines that the health of the network layer is not good, SLE module 290 may determine the cause of the bad health of the network layer. For example, SLE module 290 may compare the network node SLE of each of the network nodes making up the network layer with a threshold to determine whether each of the network node SLE satisfies the threshold. If SLE module 290 determines that the network node SLE of one or more of the network nodes of the network layer does not satisfy the threshold, SLE module 290 may determine the cause of the bad health of the network layer to be the one or more of the network nodes of the network layer. In some examples, SLE module 290 may output an indication of the determined cause of the bad health of the network layer, such as to user interface (UI) 228 for presentation in a user interface, anomaly detector 236, dependency graph generator 220, or fault localizer 240.

In some examples, a global private network (GPN) may include multiple layers. SLE module 290 may perform aggregation of SLEs at a GPN level by aggregating the SLEs of different layers in the GPN. Given a GPN having L layers of different types of nodes (e.g., application endpoint layer, transit gateway layer, network gateway layer, etc.), and given $Layer\_SLE_k$ being the SLE of a given layer k, SLE module 290 may determine the GPN-level SLE as the average (e.g., mean) of the L layer SLE, which is formally expressed as $GPN\_SLE = \frac{\sum_{k=1}^{L} Layer\_SLE_k}{L}$. Alternatively, SLE module 290 may determine the GPN-level SLE as the minimum of the L layer SLE, which is formally expressed as GPN_SLE = min $(Layer\_SLE_k$ where 1<=k<=L).

In some examples, SLE module 290 may determine the performance of a GPN based on the GPN-level SLE for the GPN. For example, SLE module 290 may compare the GPN-level SLE for the GPN with a threshold, which may be a numerical value between 0 and 100, to determine whether the GPN-level SLE satisfies the threshold. If SLE module 290 determines that the GPN-level SLE for the GPN satisfies the threshold (e.g., is greater than or equal to the threshold), SLE module 290 may determine that the health of the GPN is good. If SLE module 290 determines that the GPN-level SLE for the GPN does not satisfy the threshold (e.g., is less than the threshold), SLE module 290 may determine that the health of the GPN is not good (e.g., is of anomalous health).

In some examples, if SLE module 290 determines that the health of the GPN is not good, SLE module 290 may determine the cause of the bad health of the GPN. For example, SLE module 290 may compare the layer SLE (e.g., application layer level SLE and network layer level SLE) of each of the layers making up the GPN with a threshold to determine whether each of the layer SLE satisfies the threshold. If SLE module 290 determines that the layer SLE of one or more of the layers of the GPN does not satisfy the threshold, SLE module 290 may determine the cause of the bad health of the GPN to be the one or more of the layers of the GPN. In some examples, SLE module 290 may output an indication of the determined cause of the bad health of the GPN, such as to user interface (UI) 228 for presentation in a user interface, anomaly detector 236, dependency graph generator 220, or fault localizer 240.

In cases of hybrid and multi-cloud connectivity, a network may include different on-premises and cloud-based services that provide end-to-end connectivity between application endpoints. SLE module 290 may be able to determine the application path SLE between two application endpoints as the aggregate behavior of all network entities in the path between the two application endpoints.

SLE module 290 can determine two types of application path SLE: application endpoint to application endpoint SLEs and application group to application group SLEs. The application endpoint to application endpoint SLE is the SLE when two application endpoints communicate with each other. The application group to application group SLE is the SLE when a first group of application endpoints communicate with a second group of application endpoints having a disjoint set of application endpoints.

To determine the application endpoint to application endpoint SLE for two application endpoints, NMS 136 may determine the different possible paths between the two application endpoints. The paths between two application endpoints may include different types of forwarding nodes, such as transit gateways, gateway nodes (e.g., session smart routers), and the like, linked via various types of links, such as direct connect, direct internet access, fiber links, and the like. NMS 136 may determine the SLE of each application path between two application endpoints based on the aggregated behavior of all observable entities in the application path between the two application endpoints. In examples where there are multiple paths between two application endpoints, NMS 136 may determine the SLE of the application path between the two application endpoints based on the shortest paths between the two application endpoints.

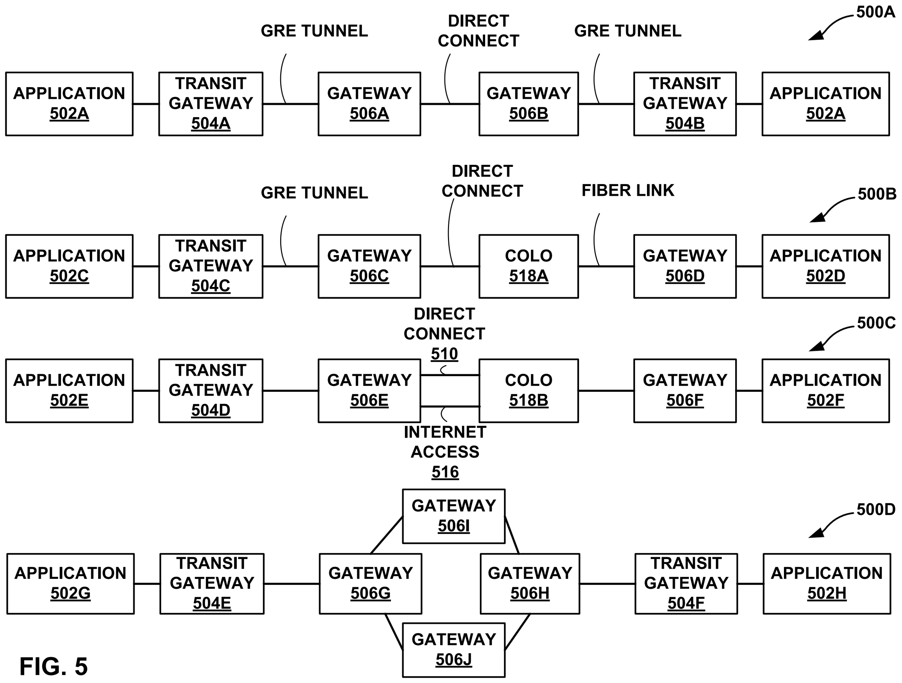

FIG. 5 is a block diagram illustrating example techniques for determining service level expectations between application endpoints, in accordance with one or more techniques of this disclosure. In FIG. 5, application path 500A illustrates a cloud-to-cloud path between application endpoints 502A and 502B that are each in a cloud.

SLE module 290 may determine the application path SLE between application endpoints 502A and 502B based on the SLEs of intermediate nodes between application endpoints 502A and 502B. In application path 500A, transit gateway node 504A, gateway node 506A, gateway node 506B, and transit gateway node 504B are the intermediate nodes between application endpoints 502A and 502B.

As such, SLE module 290 may determine the application path SLE of application path 500A based on the SLE of transit gateway node 504A, gateway node 506A, gateway node 506B, and transit gateway node 504B. In some examples, SLE module 290 may determine the application path SLE of application path 500A as the average of the SLE of transit gateway node 504A, gateway node 506A, gateway node 506B, and transit gateway node 504B, which is formally expressed as App_path_$SLE_{1,2}$ =( $TGW\_SLE_1 + GW\_SLE_1 + GW\_SLE_2 + TGW\_SLE_2$)/4. Alternatively, NMS 136 may determine the application path SLE of application path 500A as the minimum SLE out of the intermediate nodes in the path, such that App_path_$SLE_{1,2}$ = min ($TGW\_SLE_1$, $GW\_SLE_1$, $GW\_SLE_2$, $TGW\_SLE_2$).

Application path 500B illustrates a hybrid connectivity use case between application endpoints 502C and 502D. In application path 500B, transit gateway 504C, gateway 506C, and gateway 506D are the intermediate nodes between application endpoints 502C and 502D, where gateways 504C and 504D are co-located 518A. As such, there may only be a single transit gateway 504C in the application path 500B between application endpoints 502C and 502D.

SLE module 290 may determine the application path SLE of application path 500B based on the SLE of transit gateway 504C, gateway 506C, and gateway 506D. In some examples, SLE module 290 may determine the application path SLE of application path 500B as the average of the SLE of transit gateway 504C, gateway 506C, and gateway 506D, which is formally expressed as App_path_SLE$_{3,4}$ = ( $TGW\_SLE_1$ + $GW\_SLE_1$ + $GW\_SLE_2$)/3. Alternatively, SLE module 290 may determine the application path SLE of application path 500B as the minimum SLE out of the any intermediate node in the path, such that App_path_SLE$_{3,4}$ = min ($TGW\_SLE_1$, $GW\_SLE_1$, $GW\_SLE_2$).

Application path 500C between application endpoints 502E and 502F illustrates an example where there are multiple alternative links in application path 500C between intermediate nodes of application path 500C: a direct connect link that provides high bandwidth and low latency and a direct Internet access link, which may be a best-effort Internet link with unpredictable performance. Depending on the network configuration, the application traffic between application endpoints 502E and 502F can take one of the possible outgoing links.

As can be seen, in application path 500C between application endpoints 502E and 502F, transit gateway 504D, gateway 506E, and gateway 506F are the intermediate nodes between application endpoints 502E and 502F, where gateways 506E and 506F are co-located 518B. Further, Gateway 506E may communicate via two alternative communication links with gateway 506F: direct connect link 510 and direct Internet access link 516.

As such, SLE module 290 may determine an application path SLE for each of the links available in application path 500C. For example, SLE module 290 may determine two application path SLE for application path 500C: a first application path SLE that is based on the SLE of gateway 506E communicating via direct connect link 510, expressed formally as App_path_SLE$_{5,6,\ direct\_connect}$ = ( $TGW\_SLE_1$ + $GW\_SLE_{1,Direct\_connect}$, $+GW\_SLE_2$)/3, and a second application path SLE that is based on the SLE of gateway 506E communicating via direct Internet access link 516, formally expressed as App_path_SLE$_{5,6,\ internet\_access}$ = ( $TGW\_SLE_1$ + $GW\_SLE_{1,Internet\_Access}$, $+GW\_SLE_2$)/3.

Application path 500D between application endpoints 502G and 502H includes multiple shortest paths between application endpoints 502G and 502H. As can be seen, application path 500D includes a first shortest path through transit gateway 504E, gateway 506G, gateway 506I, gateway 506H, and transit gateway 504F. Application path 500D also includes a second shortest path through transit gateway 504E, gateway 506G, gateway 506J, gateway 506H, and transit gateway 504F.

SLE module 290 may determine the application path SLE for application path 500D as the aggregate of the SLEs of the shortest paths. That is, SLE module 290 may determine the application path SLE for each of the multiple shortest paths for application path 500D, and may determine an aggregated application path SLE for application path 500D based on the application path SLE for each of the multiple shortest paths for application path 500D.

SLE module 290 may determine a first application path SLE for the first shortest path through transit gateway 504E, gateway 506G, gateway 506I, gateway 506H, and transit gateway 504F, which is formally expressed as App_path_SLE$_{7,8,\ path1}$ = ( $TGW\_SLE_1$ + $GW\_SLE_1$ + $GW\_SLE_3$ + $GW\_SLE_2$ + $TGW\_SLE_2$)/5. SLE module 290 may determine a second application path SLE for the second shortest path through transit gateway 504E, gateway 506G, gateway 506J, gateway 506H, and transit gateway 504F, which is formally expressed as App_path_SLE$_{7,8,path2}$ = ( $TGW\_SLE_1$ + $GW\_SLE_1$ + $GW\_SLE_4$ + $GW\_SLE_2$ + $TGW\_SLE_2$)/5. SLE module 290 may determine an aggregated application path SLE for application path 500D based on the first application path SLE and the second application path SLE, such as an average (e.g., mean) of the first application path SLE and the second application path SLE, which is formally expressed as App_path_ SLE$_{7,8}$ = (App_path_SLE$_{7,8,\ path1}$ + App_path_SLE$_{7,8,path2}$ )/2.

In some examples, SLE module 290 may determine the performance of an application path based on the application path SLE of application path. For example, SLE module 290 may compare the application path SLE of application path with a threshold, which may be a numerical value between 0 and 100, to determine whether the application path SLE of application path satisfies the threshold. If SLE module 290 determines that the application path SLE of application path satisfies the threshold (e.g., is greater than or equal to the threshold), SLE module 290 may determine that the health of the application path is good. If SLE module 290 determines that the application path SLE of application path does not satisfy the threshold (e.g., is less than the threshold), SLE module 290 may determine that the health of the application path is not good (e.g., is of anomalous health).

In some examples, if SLE module 290 determines that the health of the application path is not good, SLE module 290 may determine the cause of the bad health of the network layer. For example, SLE module 290 may compare the network node SLE of each of the network nodes making up the application path with a threshold to determine whether each of the network node SLE satisfies the threshold. If SLE module 290 determines that the network node SLE of one or more of the network nodes of the network layer does not satisfy the threshold, SLE module 290 may determine the cause of the bad health of application path to be the one or more of the network nodes of the network layer. In some examples, SLE module 290 may output an indication of the determined cause of the bad health of the application path, such as to user interface (UI) 228 for presentation in a user interface, anomaly detector 236, dependency graph generator 220, or fault localizer 240.

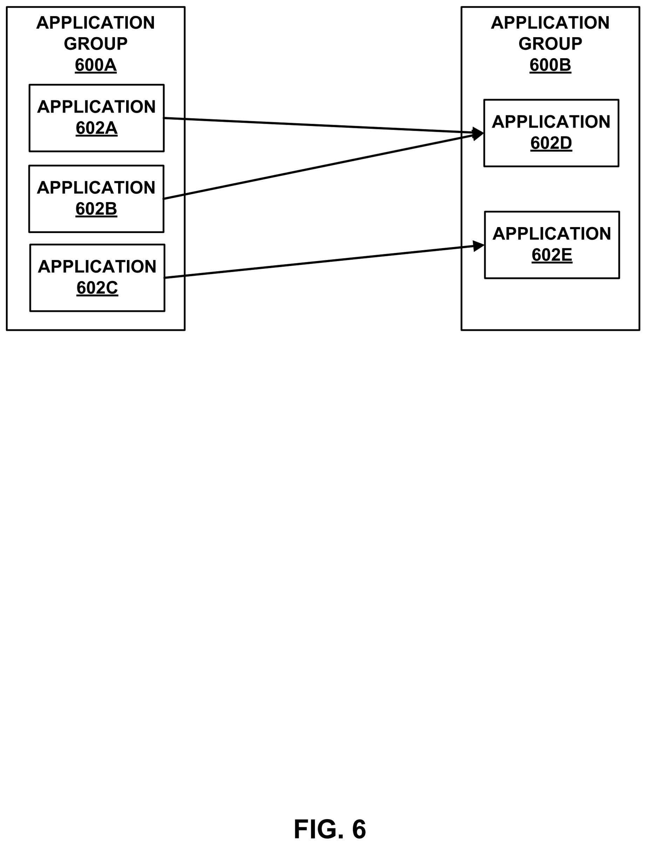

FIG. 6 is a block diagram illustrating example techniques for determining service level expectations between groups of application endpoints, in accordance with one or more techniques of this disclosure. The application group to application group SLE is the SLE when a first group of application endpoints communicate with a second group of application endpoints having a disjoint set of application endpoints.

As shown in FIG. 6, application group 600A includes application endpoints 602A-602C, and application group 600B includes application endpoints 602D and 602E. Application endpoint 602A of application group 600A communicates with application endpoint 602D of application group 600B. Application endpoint 602B of application group 600A communicates with application endpoint 602D of application group 600B. Application endpoint 602C of application group 600A communicates with application endpoint 602E of application group 600B.

In this example, application group 600A is formally referred to as G1, and application group 600B is formally referred to as G2. Further, application endpoints 602A-602C are formally referred to as A1, A2, and A3, respectively, and application endpoints 602D and 602E are formally referred to as B1 and B2. Thus, between G1 and G2, the following application endpoints pairs are illustrated as communicating with each other in the example of FIG. 6: (A1, B1), (A2, B1) and (A3, B3).

To determine the application group to application group SLE for application group 600A communicating with application group 600B, SLE module 290 may determine the application endpoint to application endpoint SLE for each application endpoints pair that communicate with each other across application groups 600A and 600B. In the example of FIG. 6, SLE module 290 may determine the application endpoint to application endpoint SLE for application endpoint pairs 602A and 602D, application endpoint pairs 602B and 602D, and application endpoint pairs 602C and 602E.

Formally, $App\_SLE_{A1, B1}$ may be the application endpoint to application endpoint SLE for application endpoints pair (A1, B1). $App\_SLE_{A2, B1}$ maybe the application endpoint to application endpoint SLE for application endpoints pair (A2, B1). $App\_SLE_{A3, B3}$ may be the application endpoint to application endpoint SLE for application endpoints pair (A3, B3).

SLE module 290 may determine the application group to application group SLE for application group 600A communicating with application group 600B based on aggregating the application endpoint to application endpoint SLE for each application endpoints pair that communicate with each other across application groups 600A and 600B. In some examples, SLE module 290 may determine the application group to application group SLE for application group 600A communicating with application group 600B, formally expressed as $App\_SLE_{G1, G2}$, as the average (e.g., mean) of the on the application endpoint to application endpoint SLE for each application endpoints pair that communicate with each other across application groups 600A and 600B. This can be formally expressed as $App\_SLE_{G1, G2} = \frac{\sum_i^K App\_SLE_{pair\_i}}{K}$, where k is the set of all communicating pairs (e.g., k = {(A1, B1), (A2, B1), (A3, B3)}).

Alternatively, SLE module 290 may determine the application group to application group SLE for application group 600A communicating with application group 600B, formally expressed as $App\_SLE_{G1, G2}$, as the minimum SLE out of the on the application endpoint to application endpoint SLE for each application endpoints pair that communicate with each other across application groups 600A and 600B. This can be formally expressed as $App\_SLE_{G1, G2}$ = min ($App\_SLE_{A1, B1}$, $App\_SLE_{A2, B1}$, $App\_SLE_{A3, B3}$).

In some examples, SLE module 290 may determine the performance of an application group based on the application group to application group SLE of application group. For example, SLE module 290 may compare the application group to application group SLE of application group with a threshold, which may be a numerical value between 0 and 100, to determine whether the application group to application group SLE of application group satisfies the threshold. If SLE module 290 determines that the application group to application group SLE of application path satisfies the threshold (e.g., is greater than or equal to the threshold), SLE module 290 may determine that the health of the application group is good. If SLE module 290 determines that the application group to application group SLE of application group does not satisfy the threshold (e.g., is less than the threshold), SLE module 290 may determine that the health of the application group is not good (e.g., is of anomalous health).

In some examples, if SLE module 290 determines that the health of the application group is not good, SLE module 290 may determine the cause of the bad health of the application group. For example, SLE module 290 may compare the application endpoint to application endpoint SLE of each of the application endpoints in the application group with a threshold to determine whether each of the application endpoint to application endpoint SLE satisfies the threshold. If SLE module 290 determines that the application endpoint to application endpoint SLE of one or more of the application endpoints of the application group does not satisfy the threshold, SLE module 290 may determine the cause of the bad health of the application group to be the one or more of the application endpoints of the application group. In some examples, SLE module 290 may output an indication of the determined cause of the bad health of the application group, such as to user interface (UI) 228 for presentation in a user interface, anomaly detector 236, dependency graph generator 220, or fault localizer 240.

In some examples, different application workloads may communicate across different groups of application endpoints. Given applications App1, App2, App3 that communicate over hybrid and multi-cloud network, each of these applications may have a set of application endpoints across the network that communicate with each other. These applications may be Kubernetes workloads or monolithic applications running on bare-metal servers or in virtualized environments, in some examples.

In order to determine application aware SLE for these applications, SLE module 290 may determine the communicating pair for each application. That is, SLE module 290 may determine, for each application, the application endpoints for the application, that are communicating with application endpoints of other applications.

In this example, Appl may have the following communicating application endpoints A1, A2, A3, and A4: {(A1, B1), (A2, B2), (A3, B3), (A4, C1)}, App2 may have the following communicating application endpoints D1 and D2: {(D1, E1), (D2, E2)}, and App3 may have the following communicating application endpoints F1, F2, and F3: {(F1, G1), (F2, G1), (F3, G1)}.

SLE module 290 may determine, for each application, the per-pair SLE for each application endpoint of the application. For example, given Appl having communicating application endpoints A1, A2, and A3 communicating with application endpoints B1, B2, B3, and C1 of other applications, SLE module 290 may determine per-pair SLE for each of application endpoint pairs (A1, B1), (A2, B2), (A3, B3), and (A4, C1), which is formally expressed as $App1\_SLE_{A1, B1}$, $App1\_SLE_{A2, B2}$, $App1\_SLE_{A3, B3}$, and $App1\_SLE_{A4, C1}$.

SLE module 290 may determine a singleton application SLE for application Appl based on aggregating the per-pair SLE for each of application endpoint pairs (A1, B1), (A2, B2), (A3, B3), and (A4, C1). In some examples, SLE module 290 may determine the application SLE for application Appl as an average (e.g., mean) of the per-pair SLE for each of application endpoint pairs (A1, B1), (A2, B2), (A3, B3), and (A4, C1), which is formally expressed as

$$\mathrm{App1\_SLE} = \frac{App1\_SLE_{A1,B1} + App1\_SLE_{A2,B2} + App1\_SLE_{A3,B3} + App1\_SLE_{A4,C1}}{4}$$

. Alternatively, SLE module 290 may determine the application SLE for application App1 as the minimum SLE of the per-pair SLE for each of application endpoint pairs (A1, B1), (A2, B2), (A3, B3), and (A4, C1), which is formally expressed as $App1\_SLE = \min(App1\_SLE_{A1,B1} + App1\_SLE_{A2,B2} + App1\_SLE_{A3,B3} + App1\_SLE_{A4,C1})$.

SLE module 290 may determine the SLE for nodes, paths, and layers of a network topology at different time granularities, and may determine both short-term and long-term SLE for nodes, paths, and layers of a network topology. SLE module 290 may be able to determine real-time SLE of network entities as well as the historical SLE of network entities, which may be useful for making future forecasts of network performance.

A short-term SLE of a network entity or layer may be SLE that are determined over a short time window, such as a thirty minute time window, a five minute time window, and the like. The short-term SLE of a network entity or layer may capture the current experience of a given network entity or layer in real-time over a shorter monitoring window.

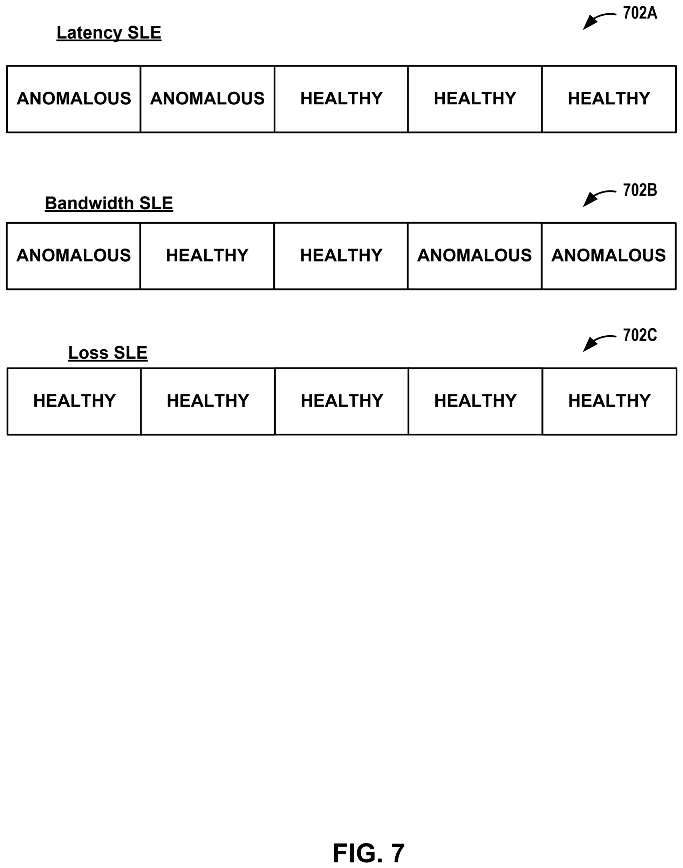

FIG. 7 is a block diagram illustrating example short term service level expectations, in accordance with one or more techniques of this disclosure.

In the example of FIG. 7, short-term SLE 702A-702C are captured over a five minute time window, with a sampling rate of one sample per minute. That is, SLE module 290 may calculate an SLE for a minute-long time window and determine whether the SLE over the minute-long time window is healthy or anomalous. For example, SLE module 290 may compare the determined SLE with a threshold to determine whether the SLE is healthy or anomalous.

Short-term SLE 702A is a latency SLE of a network entity or layer, where two out of the five samples are anomalous. As such, the latency SLE shown in short-term SLE 702A is 60%. Short-term SLE 702B is a bandwidth SLE of a network entity or layer, where three out of the five samples are anomalous. As such, the bandwidth SLE shown in short-term SLE 702B is 40%. Short-term SLE 702C is a loss SLE of a network entity or layer, where none of the five samples are anomalous. As such, the loss SLE shown in short-term SLE 702C is 100%. As can be seen, in this way, SLE module 290 may be able to determine SLE scores for short-term SLEs.

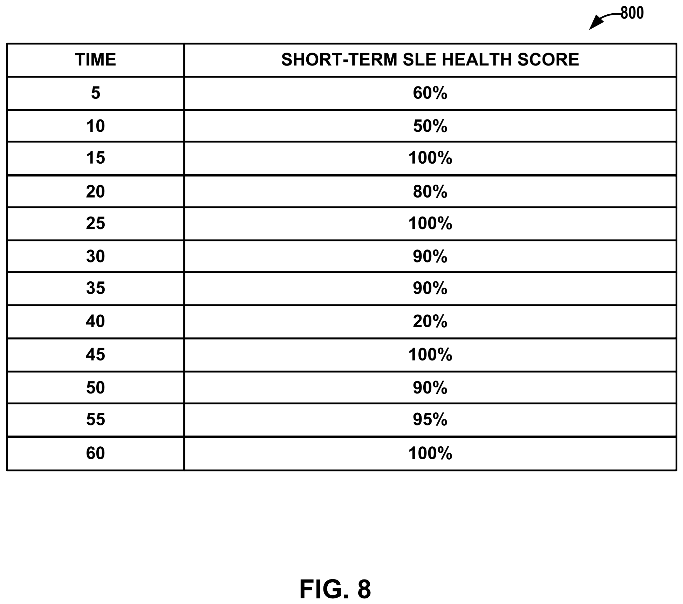

FIG. 8 is a block diagram illustrating example techniques for determining long term service level expectations, in accordance with one or more techniques of this disclosure.

The long-term SLE captures the evolution of SLE metrics over longer duration, such as over 24 hours, over a week, over a month, and the like. SLE module 290 may determine the long term SLE from the behaviors of the short-term SLE. As shown in FIG. 8, table 800 illustrates a long-term latency SLE that is derived from the short-term latency SLE that is computed every five minutes.

For long-term SLE, SLE module 290 may calculate the exponential weighted mean of the short-term latency SLE to determine the behavior of the SLE over the desired duration (e.g., 1 hour duration), which can be formally expressed as:

Long_Term_SLE_1hr = $\alpha$ Current_SLE + (1 - $\alpha$)Long_Term_SLE_1hr$_{previous}$, where $\alpha = \frac{2}{n+1}$, where n = 12, which is determined based on 12 last Short_Term_SLE samples available at 5 minute resolution in a 1 hour window.

As described above, SLE module 290 may score each of the determined SLEs, such as an application node SLE, a network node SLE, an application layer level SLE, a network node SLE, a network layer level SLE, an application path SLE, an application group to application group SLE, and the like, such as with a numerical value from 0 to 100. SLE module 290 may send the determined SLE of applications, application layers, network nodes, network layers, application paths, application groups, and the like, to anomaly detector 236 to detect, based on the SLE determined by SLE module 290 of network entities and groups of network entities, anomalies associated with network entities and groups of network entities in network system 2.

In some examples, anomaly detector 236 may compare the numerical value of the SLE with a threshold to determine whether the SLE indicates that the applications, nodes, application paths, and/or layers associated with the SLE is anomalous. Anomaly detector 236 may determine different thresholds for each of the different SLEs, each of which may, in some examples, be a numerical value between 0 and 100, and may compare an SLE with a corresponding threshold. If anomaly detector 236 determines that the SLE does not satisfy the threshold, such as by being less than the corresponding threshold, anomaly detector 236 may determine that the SLE is anomalous and may send an indication of the application, node, application path, and/or layer associated with the SLE being anomalous to dependency graph generator 220 and/or fault localizer 240, so that fault localizer 240 may be able to identify one or more network entities that contributed to the SLE not satisfying the threshold and/or identify one or more candidate root causes of the SLE not satisfying the threshold.

Dependency graph generator 220 may generate dependency graph 280 that may be used by analysis framework system 200 for cross-layer observability and troubleshooting of network system 2. Dependency graph generator 220 may generate dependency graph 280 to capture application communication patterns and corresponding underlying infrastructure of network system 2 for a given monitoring time window. In the example of microservices-based applications, dependency graph 280 may capture dynamic interactions between different services and application endpoints during a given monitoring period. In the example of machine learning workloads, dependency graph 280 may capture graphics processing unit (GPU) to GPU communication patterns. Dependency graph generator 220 may generate dependency graph 280 based on telemetry data collected by telemetry collector 216, network flow data 252 collected by flow collector 250, log data collected by log service 254, topology data collected by topology service 264, and SLE data generated by SLE module 290. Dependency graph generator 220 may receive, from anomaly detector 236, indications of network entities in network system 2 that are determined to be anomalous, and may mark the determined anomalous entities in dependency graph 280.

Dependency graph generator 220 may periodically create dependency graph 280, such as every $M$ minutes, where $M$ may be one, five, ten, fifteen, thirty, and the like. Periodically creating dependency graph 280 may enable dependency graph 280 to serve as a real-time cross-layer snapshot of the state of network system 2.

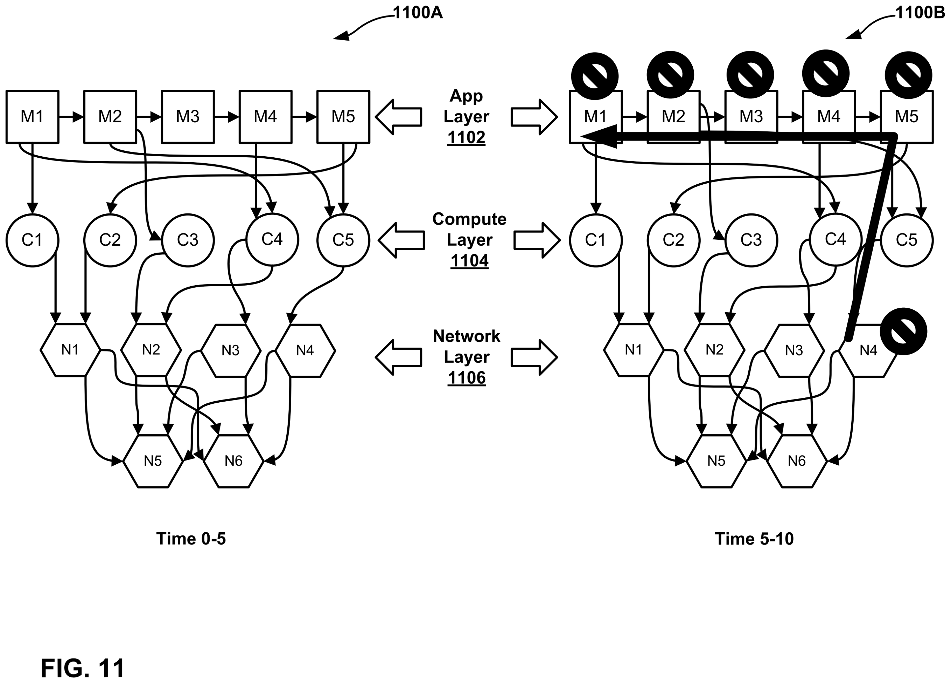

FIG. 11 is a conceptual diagram illustrating example dependency graphs 1100A and 1100B of a network system across two different monitoring time windows. Dependency graph 1100A may be a dependency graph of a network system from time 0 minutes to 5 minutes, and dependency graph 1100B may be a dependency graph of the same network system from time 5 minutes to 10 minutes. Dependency graphs 1100A and 1100B are examples of dependency graph 280 of FIG. 2.

Dependency graphs 1100A and 1100B may each include multiple layers of a network topology, such as application layer 1102, compute layer 1104 underneath application layer 1102, and network layer 1106 underneath compute layer 1104. Dependency graph generator 220 may be able to learn the layers of network topology and to learn mappings of application instances (e.g., applications 30) to compute nodes 10, such as from labels included in application telemetry 208, compute/pod telemetry 210, and network telemetry 212. Dependency graph generator 220 may also stitch application topology 266, network topology 268, and compute topology 270 to create a cross-layer real-time topology graph, and may overlay the real-time state of nodes across the layers onto the dependency graph.

As shown in FIG. 11, while no nodes in dependency graph 1100A are mark as anomalous, node N4 and nodes M1-M5 are marked as anomalous in dependency graph 1100B. As can be seen in dependency graph 1100B, the network anomaly in node N4 of network layer 1106 propagates via node C5 of compute layer 1104 to application layer 1102 and negatively impacts the performance of nodes M1-M5 of application layer 1102.

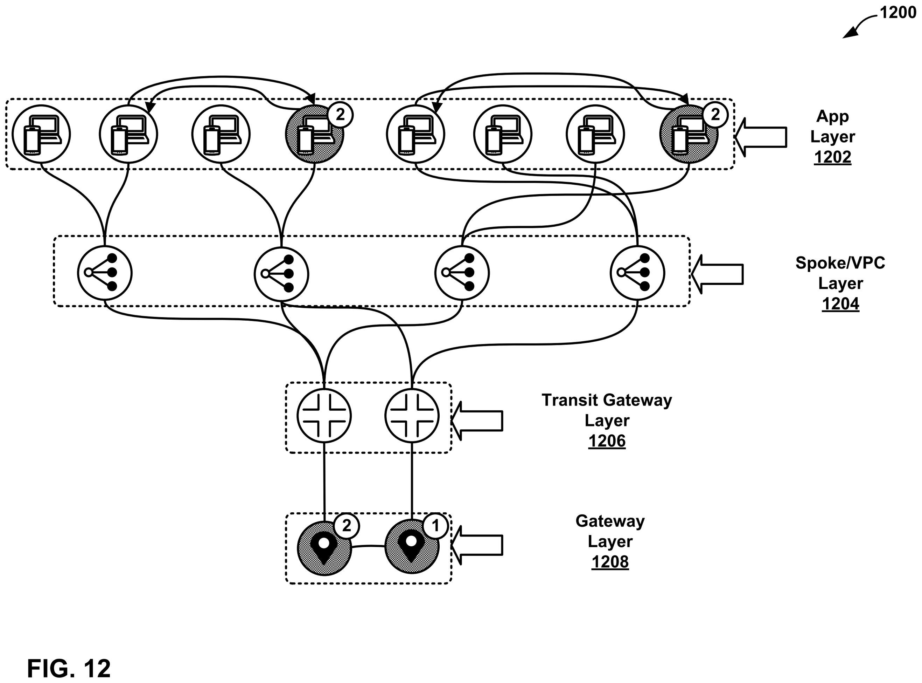

FIG. 12 is a conceptual diagram illustrating an example dependency graph 1200. As shown in FIG. 12, dependency graph 1200 illustrates entities in a hybrid and multi-cloud deployment scenario that includes application layer 1202, spoke/VPC layer 1204, transit gateway layer 1206, and gateway layer 1208.

Fault localizer 240 may determine anomalies in network system 2 and determine a ranking of potential a ranking of one or more candidate root causes of the anomalies based on dependency graph 280 as ranked list 230. In some aspects, fault localizer 240 includes causal graph generator 222, graph pruner 224 and ranking service 225. In some aspects, dependency graph generator 220, causal graph generator 222, graph pruner 224, and ranking service 225 may be executed as part of a root cause analysis pipeline.

Causal graph generator 222 generates further graph data on top of a dependency graph generated by dependency graph generator 220 to form a causal graph. The causal graph captures causal relationships between different key performance indicators and anomalous conditions. Graph pruner 224 prunes the knowledge graph and causal graph to determine a subset of the graphs to be used in root cause localization. Ranking service 225 ranks the nodes in the causal graph and to indicate the nodes that are likely to be the root cause of an observed anomaly in the order of likelihood that the node caused the anomaly.

After an application performance issue is detected, dependency graph generator 220 initiates creation of a dependency graph from the real-time telemetry collected during the time period when the application anomaly is detected.

As an example, if an application anomaly is detected at time T, then dependency graph generator 220 can generate a dependency graph for the entire infrastructure from application to network using cross-layer telemetry 304 for the past N time periods. Where N can be 5 minutes, 15 minutes, 30minutes, etc.

Dependency graph generator 220 may parse telemetry for each layer to determine the nodes for each layer and their relationships with the neighboring nodes. Generally speaking, a node can represent any entity in a network system, whether physical, virtual, or software. As an example, a node may represent a device such as a network device, a computing device, a virtual device (e.g., virtual machine, virtual router, VRF etc.), an application, a service, a microservice etc. For example, from the response time telemetry for micro services, caller and callee services can be identified from the labels that are present in the telemetry. Similarly, if an application is hosted on Kubernetes platform, then relationships between a microservice and its multiple instances can be determined from the pod level telemetry.

A dependency graph 280 generated by dependency graph generator 220 can include multiple layers such as an application layer, pod instance layer, compute node layer, network probe layer, and/or network fabric layers. Depending on the environment, dependency graph generator 220 may add or define other layers in the dependency graph. For an example, a root cause analysis framework system can be used to model the different components within a router/switch, where dependency of the ingress ports, ingress queues, fabric ports, egress ports, egress queues can be represented as a knowledge graph. Root cause analysis framework system 200 can be extended to such environments.

Causal graph generator 222 may, after determining dependency graph 280 that indicates anomalous nodes, determine a list of the anomalous key performance indicator metrics (e.g., SLEs) of anomalous nodes across the different layers to determine causal relationships between the anomalous metrics across different layers.

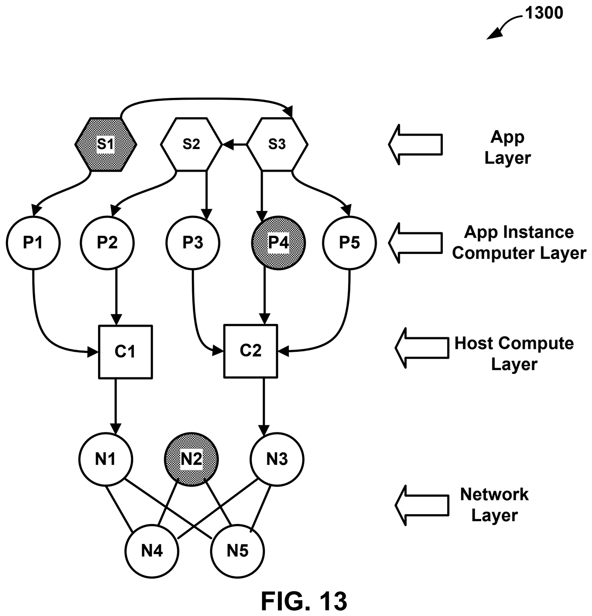

FIG. 13 illustrates an example dependency graph 1300 where nodes S1, P4, and N2 are identified as anomalous nodes. On node S1, metric M1 is anomalous. On node P4, metrics M2 and M3 are anomalous. On node N2, metric M4 is anomalous. These anomalous metrics result in four causal vertices nodes (S1, M1), (P4, M2), (P4, M3), (N2, M4).

Next, causal graph generator 222 may determine whether there are any causal relationships between these anomalous metrics, which may be based on a causality map table and/or by performing a dynamically statistical approach using Granger causality. A causality map table may include pairs of metrics across the layers that have causal relationships. Causal graph generator 222 may, for an anomalous metric, perform a lookup of the metric in the causality map table for a causal relationship with the metric. If causal graph generator 222 is unable to find a causal relationship for the metric in the causality map table, causal graph generator 222 may then perform a Granger causality test.

To be computationally efficient and scalable, causal graph generator 222 may leverage dependency graph 280 to determine the subset of anomalous metrics

Case 1: Causality analysis between distributed services in application layer nodes.

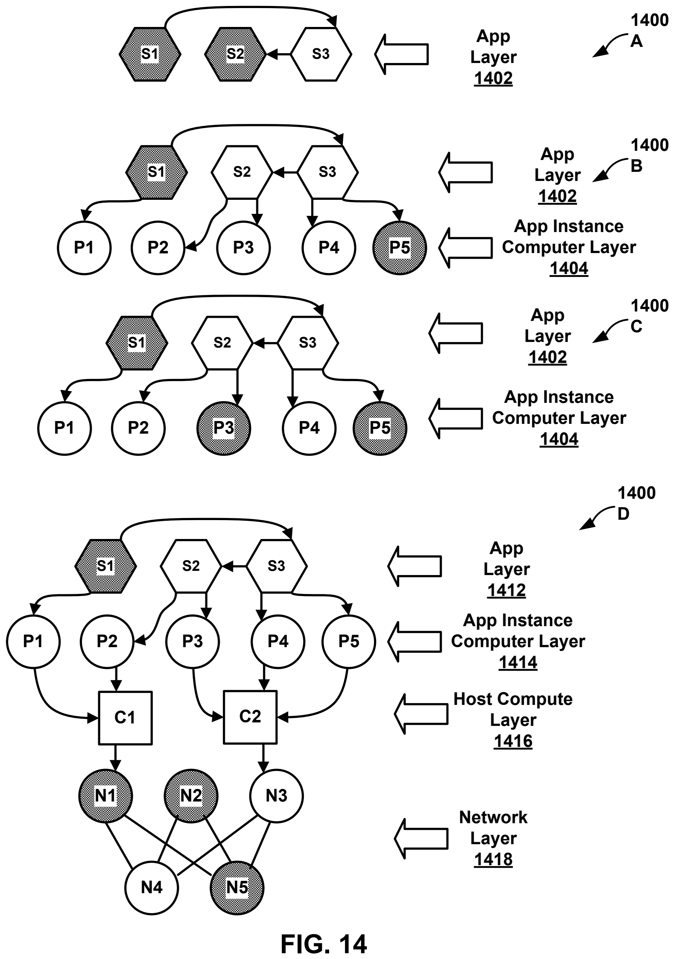

FIG. 14 shows partial dependency graphs illustrating causal relationships between anomalous metrics. As shown in FIG. 14, nodes S1 and S2 in partial dependency graph 1400A are anomalous and may be considered for causal analysis because there is a path between nodes S1 and S2 via node S3.

Case 2: Causality analysis between application and compute layer nodes.

Two anomalous nodes in different layers of a dependency graph can be paired if a path exists between the two anomalous nodes. As shown in FIG. 14, node S1 in application layer 1402 of partial dependency graph 1400B and node P5 in compute layer 1404 of partial dependency graph 1400B can be linked for analysis because node P5 is used by node S3 in partial dependency graph 1400B and because node S1 directly calls S3, such that node S3 provides a path between node S1 and node S5. As also shown in FIG. 14, node S1 in application layer 1402 of partial dependency graph 1400C and node P3 in compute layer 1404 of partial dependency graph 1400C cannot be linked for analysis because no path exists in partial dependency graph 1400C between node S1 and node P3.

Case 3: Causality analysis between application and network layer nodes.

As shown in FIG. 14, dependency graph 1400D includes application layer 1412, application instance compute layer 1414, host compute layer 1416, and network layer 1418. In application layer 1412, application service node S1 is anomalous. In network layer 1418, nodes N1, N2, and N5 are anomalous. The possible node pairs for which causal graph generator 222 may perform causality analysis may include node pairs (S1, N1), (S2, N2), and (S1, N5).

To determine which node pairs are to be considered for causality analysis, causal graph generator 222 may determine shortest network paths for communicating anomalous service pairs (e.g., node pair (S1, S3) where node S1 is calling node S3). Causal graph generator 222 may determine the shortest path between nodes S1 and S3 by determining the shortest path between corresponding compute nodes (e.g., in host compute layer 1416) that host application service nodes S1 and S3. As can be seen in dependency graph 1400D, node S1 is hosted on compute node C1 and node S3 is hosted on compute node C2. Causal graph generator 222 may determine that the shortest path between nodes C1 and C2 through network layer 1418 is through nodes C1-N1-N5-N3-C2 or through nodes C1-N1-N4-N3-C2. Considering potential network nodes N1, N3, N4, and N5 in these two shortest paths, nodes N1 and N5 are anomalous, and thus causal graph generator 222 may focus on nodes N1 and N5 for causal analysis with respect to anomalous node S1, and may exclude node N2 from causal analysis with respect to anomalous node S1. Causal graph generator 222 may therefore use a causal map table or perform a Granger Causality test to determine causal analysis of nodes N1 and N5 with respect to anomalous node S1.

After performing the causal analysis, causal graph generator 222 may assign weights to causal graph edges to capture the strength of the causal relationship to generate a weighted causality graph. For example, causal graph generator 222 may use a Pearson correlation coefficient to determine the strength of the causal graph edges. The weighted causality graph may include nodes representing anomalous metrics from layers of dependency graph 280 and edges indicating causal relationships.

Ranking service 225 may identify and rank the causal nodes in the weighted causality graph responsible for application performance issues, such as via use of a graph centrality algorithm. Ranking service 225 may use a PageRank algorithm to determine ranked list 230, which is a ranked list of possible root cause nodes. To perform such a ranking, ranking service 225 may process the causality graph to ensure that outgoing edges of each vertex in the causality graph form a probabilistic distribution for reaching neighboring nodes. For example, given a causality graph vertex X with 3 outgoing edgers connected to nodes A, B, and C with corresponding weights $W_A$, $W_B$, and Wc, ranking service 225 may normalize the edge weights to represent valid transition probabilities from node X to nodes A, B, and C in the PageRank random walk, as follows: $P_{X,i} = \frac{w_i}{(w_A w_B w_C)}$ , where I = A, B, C. Ranking service 225 may therefore apply PageRank to the causality graph with the normalized edge weights to determine a ranked list of causal graph vertices. In some examples, prior to applying PageRank to the causality graph, ranking service 225 may reverse the direction of the edges in the causality graph to increase the likelihood of visiting root cause nodes during random walks from other nodes. Ranking service 225 may determine, based on the ranked list of causal graph vertices, a ranked list of nodes that are each a possible root cause to application performance degradation as ranked list 230.

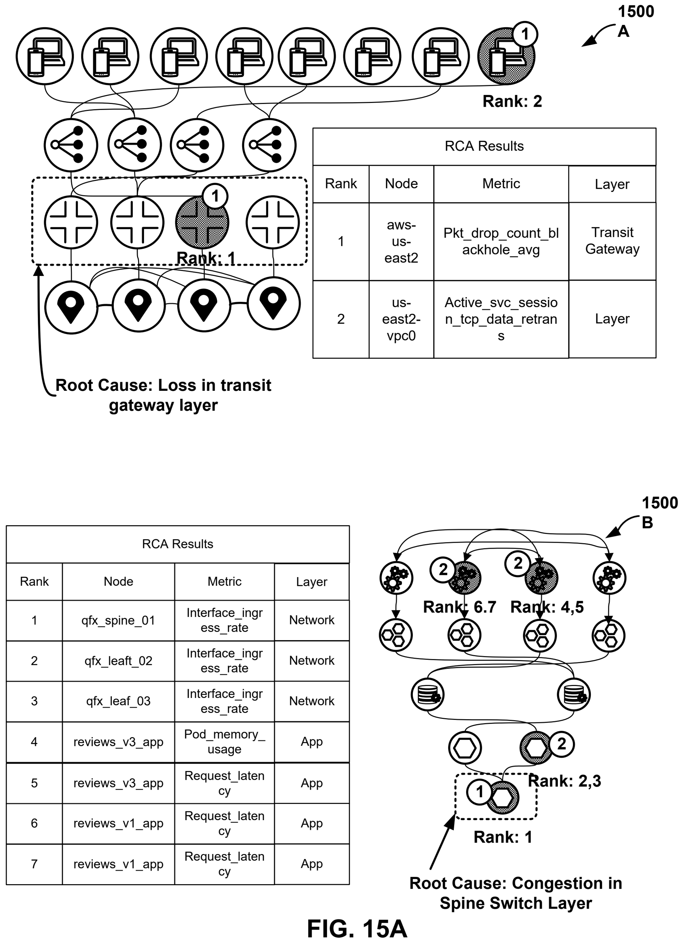

FIGS. 15A-15C shows example dependency graphs illustrating example techniques of ranking possible root causes of anomalous nodes.

As shown in FIG. 15A, dependency graph 1500A illustrates a scenario where an end-to-end cloud network is provisioned to ensure application endpoint connectivity. In dependency graph 1500A, four application endpoints may communicate each other across east and west regions in a cloud provider, and all network traffic between the application endpoints are routed via transit gateways and gateway layers.

A network packet drop fault in transit gateway node aws-us-east2 may lead to high latency anomaly in one of the application layer nodes. In this case, ranking service 225 may assign the highest rank for the possible root cause to the network packet drop occurring in the transit gateway node.

Dependency graph 1500B illustrates a scenario where a distributed microservice-based application is deployed in an on-premises Kubernetes environment, and a network fault is injected by introducing network congestion by ways of sending high-bandwidth cross traffic. Anomalies are detected in application layer and spine and leaf nodes in data center fabric. Application layer latency increases during such traffic congestion. In this case, ranking service 225 may assign the highest rank for the possible root cause to the congestion in the spine switch layer.

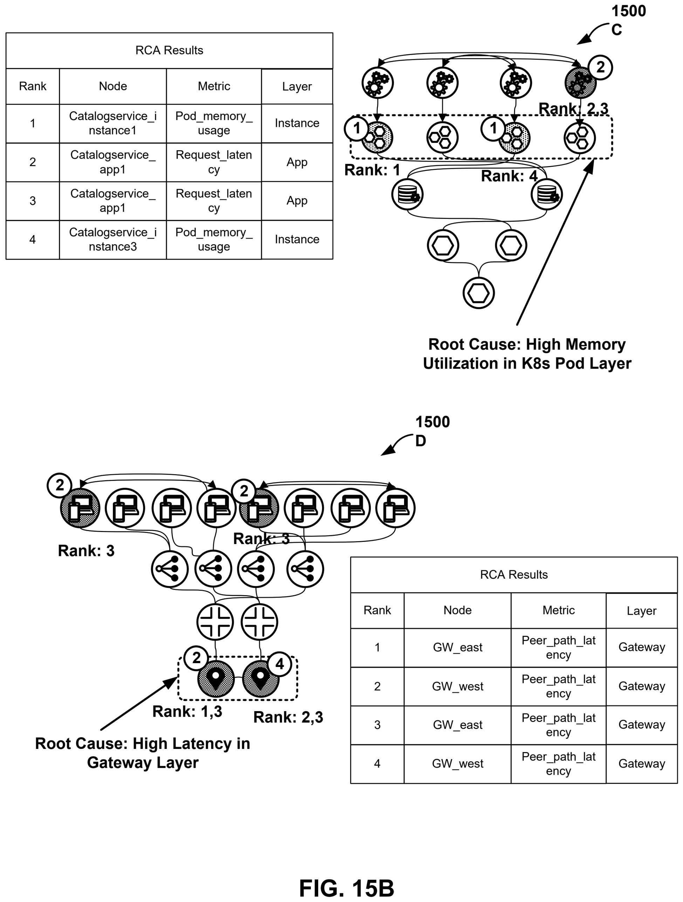

As shown in FIG. 15B, dependency graph 1500C illustrates a scenario where application layer SLE degrades. Ranking service 225 may assign the highest rank for the possible root cause to high memory utilization in the Kubernetes pod layer.

Dependency graph 1500D illustrates a scenario where there is increased latency in the application layer. Ranking service 225 may assign the highest rank for the possible root cause to a network latency fault in nodes in the gateway layer.

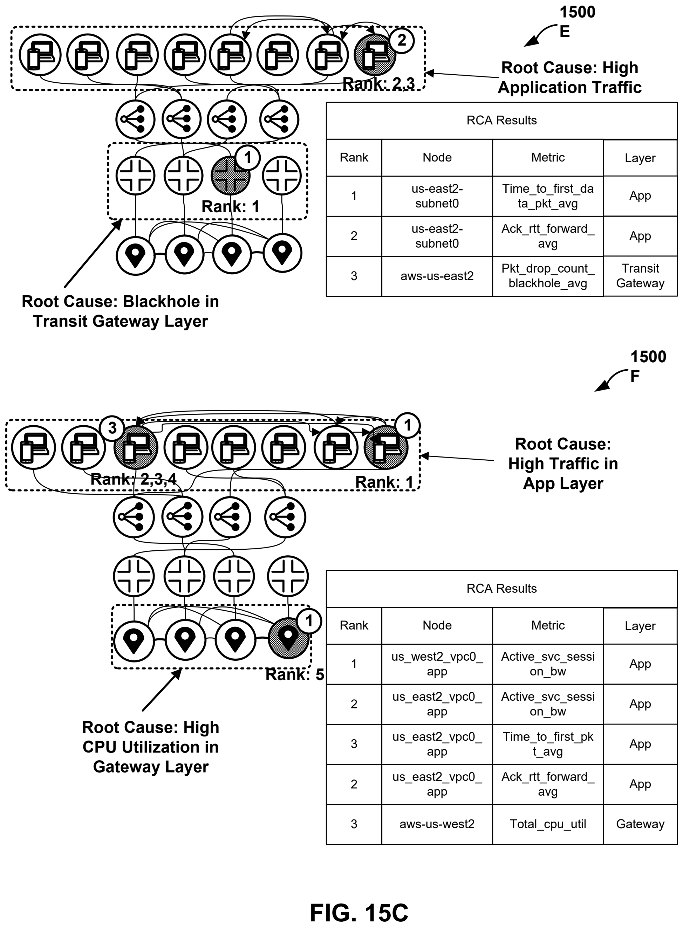

As shown in FIG. 15C, dependency graph 1500E illustrates a scenario where ranking service 225 may rank both packet drop fault in the transit gateway layer and high latency fault in the application layer in the top three possible root causes of ranked list 230.

Dependency graph 1500F illustrates a scenario where ranking service 225 may rank both high traffic in the application layer and high CPU usage in the gateway layer in the top five possible root causes of ranked list 230.

Graph pruner 224 can prune a knowledge graph to a smaller set of nodes based on the anomalies. In some aspects, pruning is done so that only nodes within a threshold distance of a node exhibiting an anomaly are selected. As used herein, a distance between two nodes is the number of edges between the nodes in the graph. In some aspects, the threshold distance is one (1), resulting in selection of the node experiencing the anomaly and its immediate neighbors. Pruning the graph can result in a smaller graph over which further root cause analysis is performed.

Causal graph generator 222 can create a causality graph based on the pruned knowledge graph. Each node in the pruned knowledge graph has set of distinct KPIs. Causal graph generator 222 can use the KPI to add nodes to the nodes of the pruned knowledge graph. The causality graph can be generated in various ways.

After causal graph generator 222 has generated a causality graph, ranking service 225 can analyze the graph and rank the most likely root causes of an anomaly. In some aspects, ranking service 225 uses a "PageRank" algorithm to rank the nodes in the causality graph. In the PageRank algorithm, the importance of webpage increases if other important webpages point to the given page. A similar analogy is used to rank the nodes in the causality graph, where node is likely to get higher score if it is being pointed by other nodes to be the root cause.

There are two modes in which a PageRank algorithm is used. In the first mode, a root cause can be determined for all service level anomalies observed in the causality graph. In the second mode, a personalized PageRank algorithm can be used that is focused on performing root cause analysis on a selected set of services or infrastructure components.

Root cause analysis framework system 200 may further include user interface (UI) 228 that can generate data indicative of various user interface screens that graphically depict the results of fault localization (e.g., ranked list 230). UI module 228 can output, e.g., for display by a separate display device, the data indicative of the various user interface screens. UI module 228 can also output, for display, data indicative of graphical user interface elements that solicit input. Input may be, for example, graph queries to be provided to graph analytics service 226.

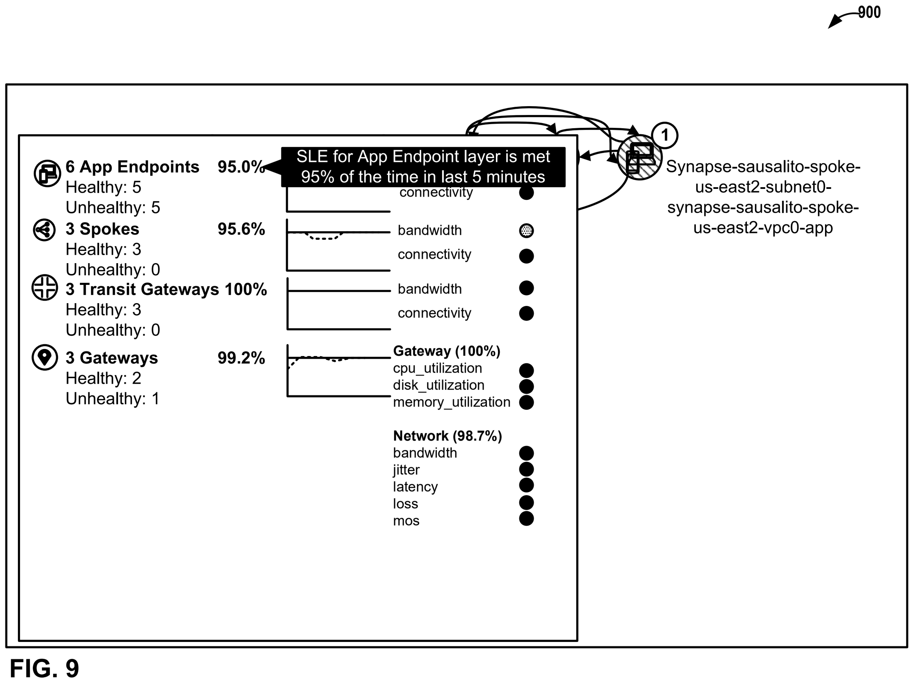

FIG. 9 illustrates an example user interface that shows performance metrics of different layers of a network topology. As shown in FIG. 9, user interface 900 shows the SLE of an application layer, a spoke layer, a transit gateway layer, and a gateway layer, including showing numerical values of the SLE of each of the layers.

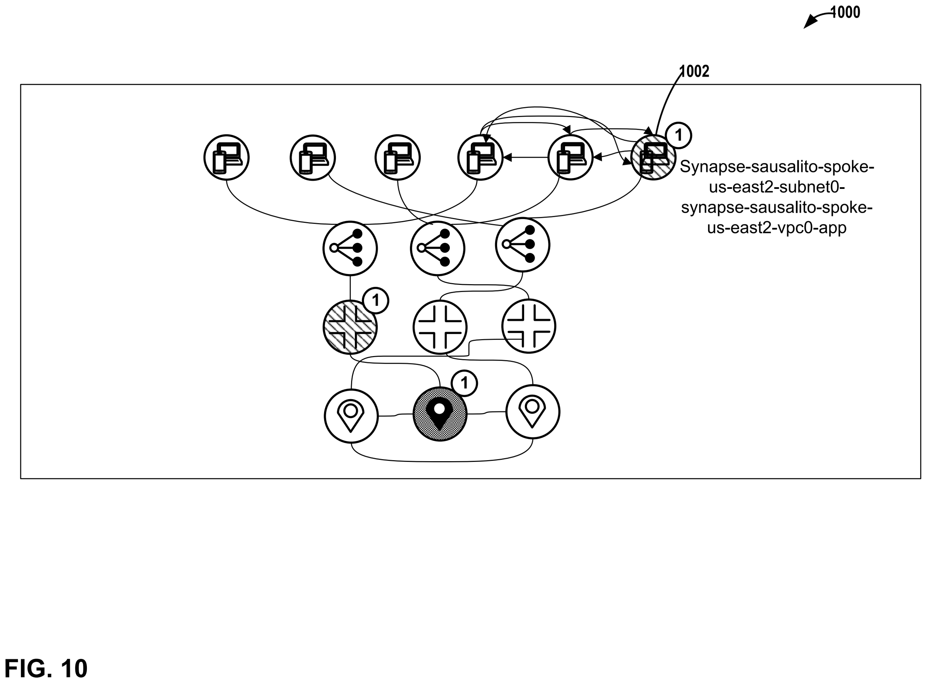

FIG. 10 illustrates an example user interface that shows a network topology of a network system. As shown in FIG. 10, user interface 1000 shows nodes of a network topology, including showing application endpoint 1002 that analysis framework system 200 has identified as being responsible for the degraded SLE of an application layer.

As noted above, some or all of root cause analysis framework system 200 may be implemented using containers. For example, root cause analysis framework system 200 may include container platform 219. In some aspects, container platform 219 may be a Kubernetes container platform. Kubernetes is a container management platform that provides portability across public and private clouds, each of which may provide virtualization infrastructure to the risk analysis framework system. In some aspects, each of the components illustrated in FIG. 2 may be a containerized component. In some aspects, each of components illustrated in FIG. 2 may be in-premise components that are not containerized. In some aspects, some of the components of FIG. 2 may be containerized, while other components are in-premise. For instance, some of telemetry services may be in-premise components that may or may not be containerized. For example, telemetry collector 216 may be located within a customer's network (e.g., in -premise).

Techniques are described for root cause analysis of distributed microservice-based applications deployed in a data center network. The techniques of the disclosure may be adapted to other environments.

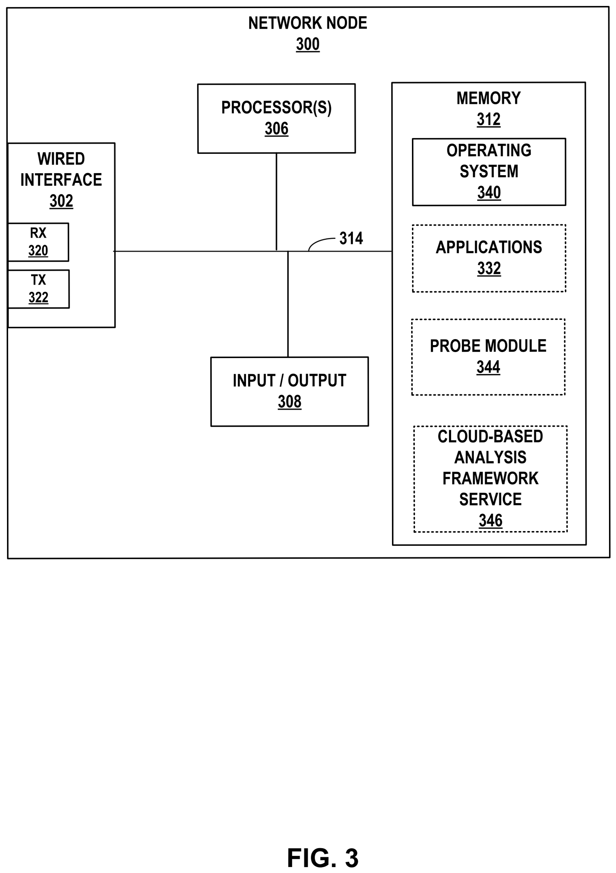

FIG. 3 is a block diagram illustrating an example network node, in accordance with the techniques described in this disclosure. Network node 300 of FIG. 3 may represent any of network devices 18, server hosting service nodes 10, servers or other computing devices associated with applications 30 of FIG. 1, or servers or computing devices associated with root cause analysis framework systems 28, 200 of FIGS 1 and 2.

In this example, network node 300 includes a communications interface 302, e.g., an Ethernet interface, one or more processors 306, input / output 308, e.g., display, buttons, keyboard, keypad, touch screen, mouse, etc., a memory 312 coupled together via a bus 314 over which the various elements may interchange data and information. Communications interface 302 couples the network node 300 to a network, such as an enterprise network. Though only one interface is shown by way of example, those skilled in the art should recognize that network nodes may, and usually do, have multiple communication interfaces. Communications interface 302 includes a receiver (RX) 320 via which the network node 300, e.g., a server, can receive data and information. Communications interface 302 includes a transmitter (TX) 322, via which the network node 300, e.g., a server, can send data and information.

Memory 312 stores executable operating system 340 and may, in various configurations, store software applications 332 and/or cloud-based framework service 346. For example, network node 300 may be configured as a server that is part of cloud-based services 26 of FIG. 1. In such configurations, application 332 may be an implementation of one or more of applications 30 of FIG. 1.

Network node 300 may be configured as a server that is part of cloud-based analysis framework 28 of FIG. 1 or analysis framework system 200 of FIG. 2. In such configurations, memory 312 may store one or more cloud-based analysis framework services 346. Cloud-based analysis framework service 346 may be and perform the functionality of any combination of telemetry collector 216, flow collector 250, log service 254, topology service 264, dependency graph generator 220, SLE services 290, anomaly detector 236, and fault localizer 240 of FIG. 2. One or more processors 306 may execute cloud-based framework service 346 to perform the functions of analysis framework system 200 of FIG. 2, as described with respect to FIG. 2.

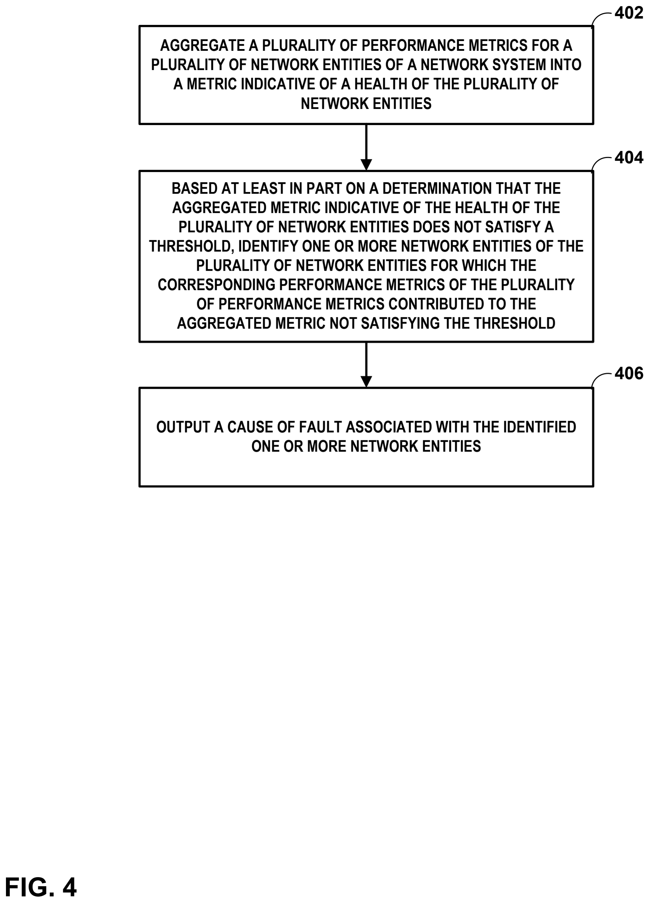

FIG. 4 is a flow diagram illustrating an example operation of a root cause analysis framework system, in accordance with one or more techniques of this disclosure. FIG. 4 is described with respect to FIGS. 1-3.

As shown in FIG. 4, analysis framework system 200 may aggregate a plurality of performance metrics for a plurality of network entities of a network system 2 into a metric indicative of a health of the plurality of network entities (402).

In some examples, the plurality of network entities are network nodes that form an application path between a first application endpoint and a second application endpoint, where the metric indicative of the health of the plurality of network entities is an application path SLE between a first application endpoint and a second application endpoint.

In some examples, a first network entity of the plurality of network entities is able to communicate via two alternative communication links with a second network entity of the plurality of network entities, and to aggregate the plurality of performance metrics for the plurality of network entities of a network system into the metric indicative of the health of the plurality of network entities, one or more processors 306 may determine a first application path SLE for the application path that is based on aggregating the plurality of performance metrics for the plurality of network entities that include first performance metrics associated with the first network entity communicating via a first communication link of the two alternative communication links and determine a second application path SLE for the application path that is based on aggregating the plurality of performance metrics for the plurality of network entities that include second performance metrics associated with the first network entity communicating via a second communication link of the two alternative communication links.

In some examples, the application path includes a plurality of shortest paths between the first application endpoint and the second application endpoint, and to aggregate the plurality of performance metrics for the plurality of network entities of a network system into the metric indicative of the health of the plurality of network entities, one or more processors 306 may determine, for each of the plurality of shortest paths between the first application endpoint and the second application endpoint, a corresponding application path SLE and determine an aggregated application path SLE for the application path based on the corresponding application path SLE for each of the plurality of shortest paths between the first application endpoint and the second application endpoint.

In some examples, to aggregate the plurality of performance metrics for the plurality of network entities of a network system into the metric indicative of the health of the plurality of network entities, one or more processors 306 may determine, for each network entity of the plurality of network entities, a network SLE that is a measure of network health from a perspective of the network entity and a network node system SLE that is a measure of a system health of the network entity, determine, for each network entity of the plurality of network entities, a network node SLE for the network entity based on the network SLE and the network node system SLE for the network entity, and aggregate the network node SLE for each network entity of the plurality of network entities as the metric indicative of the health of the plurality of network entities.

In some examples, to determine, for each network entity of the plurality of network entities, the network SLE and the network node system SLE, one or more processors 306 may determine a bandwidth SLE for the network entity, a loss SLE of the network entity, a latency SLE for the network entity, and a jitter SLE for the network entity and may determine the network SLE for the network entity based on the bandwidth SLE for the network entity, the loss SLE of the network entity, the latency SLE for the network entity, and the jitter SLE for the network entity.

In some examples, to determine, for each network entity of the plurality of network entities, the network SLE and the network node system SLE, one or more processors may determine a processor SLE for the network entity, a memory SLE of the network entity, and a disk SLE for the network entity and may determine the network node system SLE for the network entity based on the processor SLE for the network entity, the disk SLE of the network entity, and the disk SLE for the network entity.

In some examples, the plurality of network entities are application endpoints of an application, and to aggregate the plurality of performance metrics for the plurality of network entities of a network system into the metric indicative of the health of the plurality of network entities, one or more processors 306 may determine a plurality of application endpoint pairs for the plurality of application endpoints that communicate with a second plurality of application endpoints of one or more applications, determine, for each of the plurality of application endpoint pairs, a corresponding application endpoint to application endpoint service level expectations (SLE), and determine the metric indicative of the health of the plurality of network entities based on the corresponding application endpoint to application endpoint SLE for each of the plurality of application endpoint pairs.

In some examples, to determine the application endpoint out of the application endpoints of the application that contributed to the aggregated metric not satisfying the threshold, one or more processors 306 may determine a plurality of application endpoint pairs for the plurality of application endpoints that communicate with a second plurality of application endpoints of one or more applications and may determine, for each of the plurality of application endpoint pairs, an application endpoint service level expectations (SLE).

In some examples, to determine the metric indicative of the health of the plurality of network entities based on the corresponding application endpoint to application endpoint SLE for each of the plurality of application endpoint pairs, one or more processors 306 may determine the metric indicative of the health of the plurality of network entities as one of an average of the corresponding application endpoint to application endpoint SLE for each of the plurality of application endpoint pairs or a minimum SLE of the corresponding application endpoint to application endpoint SLE for each of the plurality of application endpoint pairs.

Analysis framework system 200 may, based at least in part on a determination that the aggregated metric indicative of the health of the plurality of network entities does not satisfy a threshold, identify one or more network entities of the plurality of network entities for which the corresponding performance metrics of the plurality of performance metrics contributed to the aggregated metric not satisfying the threshold (404). Analysis framework system 200 may output a cause of fault associated with the identified one or more network entities (406).

In some examples, one or more processors 306 may generate a dependency graph of the network system that indicates the health of the plurality of network entities as being anomalous, determine a ranking of one or more candidate root causes of the health of the plurality of network entities as being anomalous based on the dependency graph, and output at least a portion of the ranking.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described techniques usable by a computing system comprising storage media and processing circuitry. The processing circuitry may aggregate a plurality of performance metrics for a plurality of network entities of a network system into a metric indicative of a health of the plurality of network entities. The processing circuitry may, based at least in part on a determination that the aggregated metric indicative of the health of the plurality of network entities does not satisfy a threshold, identify one or more network entities of the plurality of network entities for which the corresponding performance metrics of the plurality of performance metrics contributed to the aggregated metric not satisfying the threshold. The processing circuitry may output a cause of fault associated with the identified one or more network entities.

Further examples of feature combinations taught by the present disclosure are set out in the following numbered clauses.

Clause 1. An analysis framework system comprising: storage media; and a processing circuitry in communication with the storage media, the processing circuitry configured to: aggregate a plurality of performance metrics for a plurality of network entities of a network system into a metric indicative of a health of the plurality of network entities; based at least in part on a determination that the aggregated metric indicative of the health of the plurality of network entities does not satisfy a threshold, identify one or more network entities of the plurality of network entities for which a corresponding performance metrics of the plurality of performance metrics contributed to the aggregated metric not satisfying the threshold; and output a cause of fault associated with the identified one or more network entities.

Clause 2. The analysis framework system of clause 1, wherein the plurality of network entities are network nodes that form an application path between a first application endpoint and a second application endpoint, and wherein the metric indicative of the health of the plurality of network entities is an application path SLE between a first application endpoint and a second application endpoint.

Clause 3. The analysis framework system of clause 2, wherein a first network entity of the plurality of network entities is able to communicate via two alternative communication links with a second network entity of the plurality of network entities, and wherein to aggregate the plurality of performance metrics for the plurality of network entities of a network system into the metric indicative of the health of the plurality of network entities, the processing circuitry is further configured to: determine a first application path SLE for the application path that is based on aggregating the plurality of performance metrics for the plurality of network entities that include first performance metrics associated with the first network entity communicating via a first communication link of the two alternative communication links; and determine a second application path SLE for the application path that is based on aggregating the plurality of performance metrics for the plurality of network entities that include second performance metrics associated with the first network entity communicating via a second communication link of the two alternative communication links.

Clause 4. The analysis framework system of clause 2 or 3, wherein the application path includes a plurality of shortest paths between the first application endpoint and the second application endpoint, and wherein to aggregate the plurality of performance metrics for the plurality of network entities of a network system into the metric indicative of the health of the plurality of network entities, the processing circuitry is further configured to: determine, for each of the plurality of shortest paths between the first application endpoint and the second application endpoint, a corresponding application path SLE; and determine an aggregated application path SLE for the application path based on the corresponding application path SLE for each of the plurality of shortest paths between the first application endpoint and the second application endpoint.

Clause 5. The analysis framework system of any preceding clause, wherein to aggregate the plurality of performance metrics for the plurality of network entities of a network system into the metric indicative of the health of the plurality of network entities, the processing circuitry is further configured to: determine, for each network entity of the plurality of network entities, a network SLE that is a measure of network health from a perspective of the network entity and a network node system SLE that is a measure of a system health of the network entity; determine, for each network entity of the plurality of network entities, a network node SLE for the network entity based on the network SLE and the network node system SLE for the network entity; and aggregate the network node SLE for each network entity of the plurality of network entities as the metric indicative of the health of the plurality of network entities.

Clause 6. The analysis framework system of clause 5, wherein to determine, for each network entity of the plurality of network entities, the network SLE and the network node system SLE, the processing circuitry is further configured to: determine a bandwidth SLE for the network entity, a loss SLE of the network entity, a latency SLE for the network entity, and a jitter SLE for the network entity; and determine the network SLE for the network entity based on the bandwidth SLE for the network entity, the loss SLE of the network entity, the latency SLE for the network entity, and the jitter SLE for the network entity.

Clause 7. The analysis framework system of clause 5 or 6, wherein to determine, for each network entity of the plurality of network entities, the network SLE and the network node system SLE, the processing circuitry is further configured to: determine a processor SLE for the network entity, a memory SLE of the network entity, and a disk SLE for the network entity; and determine the network node system SLE for the network entity based on the processor SLE for the network entity, the disk SLE of the network entity, and the disk SLE for the network entity.

Clause 8. The analysis framework system of any preceding clause, wherein the plurality of network entities are application endpoints of an application, and wherein to aggregate the plurality of performance metrics for the plurality of network entities of a network system into the metric indicative of the health of the plurality of network entities, the processing circuitry is further configured to: determine a plurality of application endpoint pairs for the plurality of application endpoints that communicate with a second plurality of application endpoints of one or more applications; determine, for each of the plurality of application endpoint pairs, a corresponding application endpoint to application endpoint service level expectations (SLE); and determine the metric indicative of the health of the plurality of network entities based on the corresponding application endpoint to application endpoint SLE for each of the plurality of application endpoint pairs.

Clause 9. The analysis framework system of clause 8, wherein to determine the application endpoint out of the application endpoints of the application that contributed to the aggregated metric not satisfying the threshold, the processing circuitry is further configured to: determine a plurality of application endpoint pairs for the plurality of application endpoints that communicate with a second plurality of application endpoints of one or more applications; and determine, for each of the plurality of application endpoint pairs, an application endpoint service level expectations (SLE).

Clause 10. The analysis framework system of clause 9, wherein to determine the metric indicative of the health of the plurality of network entities based on the corresponding application endpoint to application endpoint SLE for each of the plurality of application endpoint pairs, the processing circuitry is further configured to: determine the metric indicative of the health of the plurality of network entities as one of an average of the corresponding application endpoint to application endpoint SLE for each of the plurality of application endpoint pairs or a minimum SLE of the corresponding application endpoint to application endpoint SLE for each of the plurality of application endpoint pairs.

Clause 11. The analysis framework system of any preceding clause, wherein the processing circuitry is further configured to: generate a dependency graph of the network system that indicates the health of the plurality of network entities as being anomalous; determine a ranking of one or more candidate root causes of the health of the plurality of network entities as being anomalous based on the dependency graph; and output at least a portion of the ranking.

Clause 12. A method comprising: aggregating, by one or more processors of an analysis framework system, a plurality of performance metrics for a plurality of network entities of a network system into a metric indicative of a health of the plurality of network entities; based at least in part on a determination that the aggregated metric indicative of the health of the plurality of network entities does not satisfy a threshold, identifying, by the one or more processors, one or more network entities of the plurality of network entities for which a corresponding performance metrics of the plurality of performance metrics contributed to the aggregated metric not satisfying the threshold; and outputting, by the one or more processors, a cause of fault associated with the identified one or more network entities.

Clause 13. The method system of clause 12, wherein the plurality of network entities are network nodes that form an application path between a first application endpoint and a second application endpoint, and wherein the metric indicative of the health of the plurality of network entities is an application path SLE between a first application endpoint and a second application endpoint.

Clause 14. The method of clause 13, wherein a first network entity of the plurality of network entities is able to communicate via two alternative communication links with a second network entity of the plurality of network entities, and wherein aggregating the plurality of performance metrics for the plurality of network entities of a network system into the metric indicative of the health of the plurality of network entities further comprises: determining, by the one or more processors, a first application path SLE for the application path that is based on aggregating the plurality of performance metrics for the plurality of network entities that include first performance metrics associated with the first network entity communicating via a first communication link of the two alternative communication links; and determining, by the one or more processors, a second application path SLE for the application path that is based on aggregating the plurality of performance metrics for the plurality of network entities that include second performance metrics associated with the first network entity communicating via a second communication link of the two alternative communication links.

Clause 15. The method of clause 13 or 14, wherein the application path includes a plurality of shortest paths between the first application endpoint and the second application endpoint, and wherein aggregating the plurality of performance metrics for the plurality of network entities of a network system into the metric indicative of the health of the plurality of network entities further comprises: determining, by the one or more processors and for each of the plurality of shortest paths between the first application endpoint and the second application endpoint, a corresponding application path SLE; and determining, by the one or more processors, an aggregated application path SLE for the application path based on the corresponding application path SLE for each of the plurality of shortest paths between the first application endpoint and the second application endpoint.

Clause 16. The method of any of clauses 12 to 15, wherein aggregating the plurality of performance metrics for the plurality of network entities of a network system into the metric indicative of the health of the plurality of network entities further comprises: determining, by the one or more processors and for each network entity of the plurality of network entities, a network SLE that is a measure of network health from a perspective of the network entity and a network node system SLE that is a measure of a system health of the network entity; determining, by the one or more processors and for each network entity of the plurality of network entities, a network node SLE for the network entity based on the network SLE and the network node system SLE for the network entity; and aggregating, by the one or more processors, the network node SLE for each network entity of the plurality of network entities as the metric indicative of the health of the plurality of network entities.

Clause 17. The method of clause 16, wherein determining, for each network entity of the plurality of network entities, the network SLE and the network node system SLE further comprises: determining, by the one or more processors, a bandwidth SLE for the network entity, a loss SLE of the network entity, a latency SLE for the network entity, and a jitter SLE for the network entity; and determining, by the one or more processors, the network SLE for the network entity based on the bandwidth SLE for the network entity, the loss SLE of the network entity, the latency SLE for the network entity, and the jitter SLE for the network entity.

Clause 18. The method of clause 16 or 17, wherein determining, for each network entity of the plurality of network entities, the network SLE and the network node system SLE further comprises: determining, by the one or more processors, a processor SLE for the network entity, a memory SLE of the network entity, and a disk SLE for the network entity; and determining, by the one or more processors, the network node system SLE for the network entity based on the processor SLE for the network entity, the disk SLE of the network entity, and the disk SLE for the network entity.

Clause 19.The method of any of clauses 12 to 18, wherein the plurality of network entities are application endpoints of an application, and wherein aggregating the plurality of performance metrics for the plurality of network entities of a network system into the metric indicative of the health of the plurality of network entities further comprises: determining, by the one or more processors, a plurality of application endpoint pairs for the plurality of application endpoints that communicate with a second plurality of application endpoints of one or more applications; determining, by the one or more processors and for each of the plurality of application endpoint pairs, a corresponding application endpoint to application endpoint service level expectations (SLE); and determining, by the one or more processors, the metric indicative of the health of the plurality of network entities based on the corresponding application endpoint to application endpoint SLE for each of the plurality of application endpoint pairs.

Clause 20. A computer-readable medium including instructions that, when executed, cause one or more processors to execute an analysis framework system, wherein the analysis framework system is configured to: aggregate a plurality of performance metrics for a plurality of network entities of a network system into a metric indicative of a health of the plurality of network entities; based at least in part on a determination that the aggregated metric indicative of the health of the plurality of network entities does not satisfy a threshold, identify one or more network entities of the plurality of network entities for which a corresponding performance metrics of the plurality of performance metrics contributed to the aggregated metric not satisfying the threshold; and output a cause of fault associated with the identified one or more network entities.

**Claims**

1. An analysis framework system comprising:

   storage media; and
   a processing circuitry in communication with the storage media, the processing circuitry configured to:

      aggregate a plurality of performance metrics for a plurality of network entities of a network system into a metric indicative of a health of the plurality of network entities;
      based at least in part on a determination that the aggregated metric indicative of the health of the plurality of network entities does not satisfy a threshold, identify one or more network entities of the plurality of network entities for which a corresponding performance metrics of the plurality of performance metrics contributed to the aggregated metric not satisfying the threshold; and
      output a cause of fault associated with the identified one or more network entities.

2. The analysis framework system of claim 1, wherein the plurality of network entities are network nodes that form an application path between a first application endpoint and a second application endpoint, and wherein the metric indicative of the health of the plurality of network entities is an application path SLE between a first application endpoint and a second application endpoint.

3. The analysis framework system of claim 2, wherein a first network entity of the plurality of network entities is able to communicate via two alternative communication links with a second network entity of the plurality of network entities, and wherein to aggregate the plurality of performance metrics for the plurality of network entities of a network system into the metric indicative of the health of the plurality of network entities, the processing circuitry is further configured to:

   determine a first application path service level expectation, SLE, for the application path that is based on aggregating the plurality of performance metrics for the plurality of network entities that include first performance metrics associated with the first network entity communicating via a first communication link of the two alternative communication links; and
   determine a second application path SLE for the application path that is based on aggregating the plurality of performance metrics for the plurality of network entities that include second performance metrics associated with the first network entity communicating via a second communication link of the two alternative communication links.

4. The analysis framework system of claim 2 or 3, wherein the application path includes a plurality of shortest paths between the first application endpoint and the second application endpoint, and wherein to aggregate the plurality of performance metrics for the plurality of network entities of a network system into the metric indicative of the health of the plurality of network entities, the processing circuitry is further configured to:

   determine, for each of the plurality of shortest paths between the first application endpoint and the second application endpoint, a corresponding application path SLE; and
   determine an aggregated application path SLE for the application path based on the corresponding application path SLE for each of the plurality of shortest paths between the first application endpoint and the second application endpoint.

5. The analysis framework system of any of claims 1-4, wherein to aggregate the plurality of performance metrics for the plurality of network entities of a network system into the metric indicative of the health of the plurality of network entities, the processing circuitry is further configured to:

determine, for each network entity of the plurality of network entities, a network SLE that is a measure of network health from a perspective of the network entity and a network node system SLE that is a measure of a system health of the network entity;

determine, for each network entity of the plurality of network entities, a network node SLE for the network entity based on the network SLE and the network node system SLE for the network entity; and

aggregate the network node SLE for each network entity of the plurality of network entities as the metric indicative of the health of the plurality of network entities.

6. The analysis framework system of claim 5, wherein to determine, for each network entity of the plurality of network entities, the network SLE and the network node system SLE, the processing circuitry is further configured to:

determine a bandwidth SLE for the network entity, a loss SLE of the network entity, a latency SLE for the network entity, and a jitter SLE for the network entity; and

determine the network SLE for the network entity based on the bandwidth SLE for the network entity, the loss SLE of the network entity, the latency SLE for the network entity, and the jitter SLE for the network entity.

7. The analysis framework system of claim 5, wherein to determine, for each network entity of the plurality of network entities, the network SLE and the network node system SLE, the processing circuitry is further configured to:

determine a processor SLE for the network entity, a memory SLE of the network entity, and a disk SLE for the network entity; and

determine the network node system SLE for the network entity based on the processor SLE for the network entity, the disk SLE of the network entity, and the disk SLE for the network entity.

8. The analysis framework system of any of claims 1-7, wherein the plurality of network entities are application endpoints of an application, and wherein to aggregate the plurality of performance metrics for the plurality of network entities of a network system into the metric indicative of the health of the plurality of network entities, the processing circuitry is further configured to:

determine a plurality of application endpoint pairs for the plurality of application endpoints that communicate with a second plurality of application endpoints of one or more applications;

determine, for each of the plurality of application endpoint pairs, a corresponding application endpoint to application endpoint service level expectations, SLE; and

determine the metric indicative of the health of the plurality of network entities based on the corresponding application endpoint to application endpoint SLE for each of the plurality of application endpoint pairs.

9. The analysis framework system of claim 8, wherein to determine the application endpoint out of the application endpoints of the application that contributed to the aggregated metric not satisfying the threshold, the processing circuitry is further configured to:

determine a plurality of application endpoint pairs for the plurality of application endpoints that communicate with a second plurality of application endpoints of one or more applications; and

determine, for each of the plurality of application endpoint pairs, an application endpoint service level expectations, SLE,.

10. The analysis framework system of claim 9, wherein to determine the metric indicative of the health of the plurality of network entities based on the corresponding application endpoint to application endpoint SLE for each of the plurality of application endpoint pairs, the processing circuitry is further configured to:
determine the metric indicative of the health of the plurality of network entities as one of an average of the corresponding application endpoint to application endpoint SLE for each of the plurality of application endpoint pairs or a minimum SLE of the corresponding application endpoint to application endpoint SLE for each of the plurality of application endpoint pairs.

11. The analysis framework system of any of claims 1-10, wherein the processing circuitry is further configured to:

generate a dependency graph of the network system that indicates the health of the plurality of network entities as being anomalous;
determine a ranking of one or more candidate root causes of the health of the plurality of network entities as being anomalous based on the dependency graph; and
output at least a portion of the ranking.

12. A method comprising:

aggregating, by one or more processors of an analysis framework system, a plurality of performance metrics for a plurality of network entities of a network system into a metric indicative of a health of the plurality of network entities;
based at least in part on a determination that the aggregated metric indicative of the health of the plurality of network entities does not satisfy a threshold, identifying, by the one or more processors, one or more network entities of the plurality of network entities for which a corresponding performance metrics of the plurality of performance metrics contributed to the aggregated metric not satisfying the threshold; and
outputting, by the one or more processors, a cause of fault associated with the identified one or more network entities.

13. The method system of claim 12, further comprising steps corresponding to the functionality recited by any of claims 2-11.

14. Computer-readable media comprising instructions that, when executed, cause one or more processors to execute an analysis framework system, wherein the analysis framework system is configured to perform the method recited by any of claims 12 and 13.

**FIG. 1**

EP 4 787 795 A1

**FIG. 2**

NETWORK NODE
300

PROCESSOR(S)
306

MEMORY
312

OPERATING
SYSTEM
340

WIRED
INTERFACE
302

APPLICATIONS
332

RX
320

TX
322

314

PROBE MODULE
344

INPUT / OUTPUT
308

CLOUD-BASED
ANALYSIS
FRAMEWORK
SERVICE
346

# FIG. 3

402

AGGREGATE A PLURALITY OF PERFORMANCE METRICS FOR A PLURALITY OF NETWORK ENTITIES OF A NETWORK SYSTEM INTO A METRIC INDICATIVE OF A HEALTH OF THE PLURALITY OF NETWORK ENTITIES

404

BASED AT LEAST IN PART ON A DETERMINATION THAT THE AGGREGATED METRIC INDICATIVE OF THE HEALTH OF THE PLURALITY OF NETWORK ENTITIES DOES NOT SATISFY A THRESHOLD, IDENTIFY ONE OR MORE NETWORK ENTITIES OF THE PLURALITY OF NETWORK ENTITIES FOR WHICH THE CORRESPONDING PERFORMANCE METRICS OF THE PLURALITY OF PERFORMANCE METRICS CONTRIBUTED TO THE AGGREGATED METRIC NOT SATISFYING THE THRESHOLD

406

OUTPUT A CAUSE OF FAULT ASSOCIATED WITH THE IDENTIFIED ONE OR MORE NETWORK ENTITIES

**FIG. 4**

500A

GRE TUNNEL

DIRECT
CONNECT

GRE TUNNEL

| APPLICATION 502A | — | TRANSIT GATEWAY 504A | — | GATEWAY 506A | — | GATEWAY 506B | — | TRANSIT GATEWAY 504B | — | APPLICATION 502A |

500B

GRE TUNNEL

DIRECT
CONNECT

FIBER LINK

| APPLICATION 502C | — | TRANSIT GATEWAY 504C | — | GATEWAY 506C | — | COLO 518A | — | GATEWAY 506D | — | APPLICATION 502D |

500C

DIRECT
CONNECT
510

| APPLICATION 502E | — | TRANSIT GATEWAY 504D | — | GATEWAY 506E | — | COLO 518B | — | GATEWAY 506F | — | APPLICATION 502F |

INTERNET
ACCESS
516

500D

GATEWAY 506I

| APPLICATION 502G | — | TRANSIT GATEWAY 504E | — | GATEWAY 506G | | GATEWAY 506H | — | TRANSIT GATEWAY 504F | — | APPLICATION 502H |

GATEWAY 506J

**FIG. 5**

APPLICATION
GROUP
600A

APPLICATION
602A

APPLICATION
602B

APPLICATION
602C

APPLICATION
GROUP
600B

APPLICATION
602D

APPLICATION
602E

# FIG. 6

**Latency SLE** — 702A

| ANOMALOUS | ANOMALOUS | HEALTHY | HEALTHY | HEALTHY |
|---|---|---|---|---|

**Bandwidth SLE** — 702B

| ANOMALOUS | HEALTHY | HEALTHY | ANOMALOUS | ANOMALOUS |
|---|---|---|---|---|

**Loss SLE** — 702C

| HEALTHY | HEALTHY | HEALTHY | HEALTHY | HEALTHY |
|---|---|---|---|---|

# FIG. 7

800

| TIME | SHORT-TERM SLE HEALTH SCORE |
|:---:|:---:|
| 5 | 60% |
| 10 | 50% |
| 15 | 100% |
| 20 | 80% |
| 25 | 100% |
| 30 | 90% |
| 35 | 90% |
| 40 | 20% |
| 45 | 100% |
| 50 | 90% |
| 55 | 95% |
| 60 | 100% |

# FIG. 8

**FIG. 9**

900

**6 App Endpoints** 95.0%
Healthy: 5
Unhealthy: 5

**3 Spokes** 95.6%
Healthy: 3
Unhealthy: 0

**3 Transit Gateways** 100%
Healthy: 3
Unhealthy: 0

**3 Gateways** 99.2%
Healthy: 2
Unhealthy: 1

SLE for App Endpoint layer is met
95% of the time in last 5 minutes

connectivity

bandwidth
connectivity

bandwidth
connectivity

**Gateway (100%)**
cpu_utilization
disk_utilization
memory_utilization

**Network (98.7%)**
bandwidth
jitter
latency
loss
mos

Synapse-sausalito-spoke-
us-east2-subnet0-
synapse-sausalito-spoke-
us-east2-vpc0-app

Synapse-sausalito-spoke-
us-east2-subnet0-
synapse-sausalito-spoke-
us-east2-vpc0-app

1000

1002

FIG. 10

**FIG. 11**

EP 4 787 795 A1

Time 0-5

Time 5-10

**FIG. 12**

EP 4 787 795 A1

FIG. 13

**FIG. 14**

1500
A

Rank: 2

| RCA Results | | | |
|---|---|---|---|
| Rank | Node | Metric | Layer |
| 1 | aws-us-east2 | Pkt_drop_count_blackhole_avg | Transit Gateway |
| 2 | us-east2-vpc0 | Active_svc_session_tcp_data_retrans | Layer |

Rank: 1

**Root Cause: Loss in transit gateway layer**

1500
B

| RCA Results | | | |
|---|---|---|---|
| Rank | Node | Metric | Layer |
| 1 | qfx_spine_01 | Interface_ingress_rate | Network |
| 2 | qfx_leaft_02 | Interface_ingress_rate | Network |
| 3 | qfx_leaf_03 | Interface_ingress_rate | Network |
| 4 | reviews_v3_app | Pod_memory_usage | App |
| 5 | reviews_v3_app | Request_latency | App |
| 6 | reviews_v1_app | Request_latency | App |
| 7 | reviews_v1_app | Request_latency | App |

Rank: 6.7    Rank: 4,5

Rank: 2,3

Rank: 1

**Root Cause: Congestion in Spine Switch Layer**

# FIG. 15A

1500
C

| RCA Results | | | |
|---|---|---|---|
| Rank | Node | Metric | Layer |
| 1 | Catalogservice_instance1 | Pod_memory_usage | Instance |
| 2 | Catalogservice_app1 | Request_latency | App |
| 3 | Catalogservice_app1 | Request_latency | App |
| 4 | Catalogservice_instance3 | Pod_memory_usage | Instance |

Rank: 2,3

Rank: 1

Rank: 4

**Root Cause: High Memory Utilization in K8s Pod Layer**

1500
D

Rank: 3

Rank: 3

Rank: 1,3

Rank: 2,3

**Root Cause: High Latency in Gateway Layer**

| RCA Results | | | |
|---|---|---|---|
| Rank | Node | Metric | Layer |
| 1 | GW_east | Peer_path_latency | Gateway |
| 2 | GW_west | Peer_path_latency | Gateway |
| 3 | GW_east | Peer_path_latency | Gateway |
| 4 | GW_west | Peer_path_latency | Gateway |

## FIG. 15B

1500
E

**Root Cause: High
Application Traffic**

**Rank: 2,3**

**Rank: 1**

**Root Cause: Blackhole in
Transit Gateway Layer**

| RCA Results | | | |
|---|---|---|---|
| Rank | Node | Metric | Layer |
| 1 | us-east2-subnet0 | Time_to_first_data_pkt_avg | App |
| 2 | us-east2-subnet0 | Ack_rtt_forward_avg | App |
| 3 | aws-us-east2 | Pkt_drop_count_blackhole_avg | Transit Gateway |

1500
F

**Root Cause:
High Traffic in
App Layer**

**Rank: 2,3,4**

**Rank: 1**

**Rank: 5**

**Root Cause: High
CPU Utilization in
Gateway Layer**

| RCA Results | | | |
|---|---|---|---|
| Rank | Node | Metric | Layer |
| 1 | us_west2_vpc0_app | Active_svc_session_bw | App |
| 2 | us_east2_vpc0_app | Active_svc_session_bw | App |
| 3 | us_east2_vpc0_app | Time_to_first_pkt_avg | App |
| 2 | us_east2_vpc0_app | Ack_rtt_forward_avg | App |
| 3 | aws-us-west2 | Total_cpu_util | Gateway |

# FIG. 15C

Europäisches
Patentamt
European
Patent Office
Office européen
des brevets

# EUROPEAN SEARCH REPORT

**Application Number**

EP 26 15 4235

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/422085 A1 (KUMAR PRASHANT [US] ET AL) 19 December 2024 (2024-12-19)<br>* paragraph [0008] - paragraph [0010] *<br>* paragraph [0085] *<br>* paragraph [0091] *<br>* paragraph [0139] *<br>* paragraph [0144] *<br>* paragraph [0192] - paragraph [0199] *<br>* paragraph [0213] *<br>* figures 7,11 * | 1,3-10, 12,14 | INV.<br>H04L41/0631<br>H04L41/5009<br>H04L43/091<br>G06F11/07<br><br>ADD.<br>H04L43/08<br>H04L43/16<br>H04L41/22 |
| X | US 2024/007342 A1 (GUPTA RAHUL [IN] ET AL) 4 January 2024 (2024-01-04)<br>* paragraph [0004] - paragraph [0006] *<br>* paragraph [0092] - paragraph [0093] *<br>* paragraph [0104] - paragraph [0106] *<br>* paragraph [0119] *<br>* paragraph [0183] *<br>* paragraph [0230] * | 1,2, 11-14 | |
| X | US 2023/070701 A1 (WANG JISHENG [US] ET AL) 9 March 2023 (2023-03-09)<br>* paragraph [0007] *<br>* paragraph [0092] - paragraph [0096] *<br>* paragraph [0103] - paragraph [0106] * | 1,3-10, 12,14 | TECHNICAL FIELDS SEARCHED (IPC)<br><br>H04L<br>G06F |
| A | Juniper: "Service Level Expectations (SLE) Mist Juniper Networks",<br>,<br>21 January 2025 (2025-01-21), XP093397736,<br>Retrieved from the Internet:<br>URL:https://web.archive.org/web/2025012102<br>1053/https://www.juniper.net/documentation<br>/us/en/software/mist/mist-aiops/shared-con<br>tent/topics/concept/service-level-expectat<br>ions.html<br>[retrieved on 2026-05-13]<br>* the whole document * | 1,12,14 | |

The present search report has been drawn up for all claims

| Place of search | Date of completion of the search | Examiner |
|---|---|---|
| Munich | 26 May 2026 | Ramenzoni, Stefano |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P4C01)

## ANNEX TO THE EUROPEAN SEARCH REPORT
## ON EUROPEAN PATENT APPLICATION NO.

EP 26 15 4235

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2026

| Patent document cited in search report | Publication date | Patent family member(s) | Publication date |
|---|---|---|---|
| US 2024422085 A1 | 19-12-2024 | CN 119172222 A | 20-12-2024 |
| | | EP 4466833 A1 | 27-11-2024 |
| | | US 2023231785 A1 | 20-07-2023 |
| | | US 2023261930 A1 | 17-08-2023 |
| | | US 2024422085 A1 | 19-12-2024 |
| | | US 2025158907 A1 | 15-05-2025 |
| | | WO 2023137499 A1 | 20-07-2023 |
| US 2024007342 A1 | 04-01-2024 | CN 119422353 A | 11-02-2025 |
| | | EP 4548546 A1 | 07-05-2025 |
| | | US 2024007342 A1 | 04-01-2024 |
| | | US 2025150326 A1 | 08-05-2025 |
| | | US 2025150327 A1 | 08-05-2025 |
| | | WO 2024006980 A1 | 04-01-2024 |
| US 2023070701 A1 | 09-03-2023 | CN 115733727 A | 03-03-2023 |
| | | EP 4142239 A1 | 01-03-2023 |
| | | US 2023070701 A1 | 09-03-2023 |

EPO FORM P0459

For more details about this annex : see Official Journal of the European Patent Office, No. 12/82

## EP 4 787 795 A1

**Patent documents cited in the description**

- US 04523125